(19) **Europäisches Patentamt**

**European Patent Office**

**Office européen des brevets**

(11) **EP 1 427 146 B1**

(12) **EUROPEAN PATENT SPECIFICATION**

(45) Date of publication and mention
of the grant of the patent:
**09.08.2006 Bulletin 2006/32**

(51) Int Cl.:
*H04L 12/28* (2006.01)       *H04L 29/06* (2006.01)

(21) Application number: **03022155.0**

(22) Date of filing: **30.09.2003**

(54) **Packet transmission system and packet reception system**

Packetübertragungssystem und Packetempfangssystem

Système de transmission de paquets et système de réception de paquets

(84) Designated Contracting States:
**DE GB**

(30) Priority: **02.12.2002   JP 2002350064**

(43) Date of publication of application:
**09.06.2004   Bulletin 2004/24**

(73) Proprietor: **NEC Infrontia Corporation
Kawasaki-shi,
Kanagawa (JP)**

(72) Inventors:
• **Hashimoto, Naoki
Kawasaki-shi
Kanagawa (JP)**

• **Kobayashi, Yoshikazu
Kawasaki-shi
Kanagawa (JP)**

(74) Representative: **Betten & Resch
Patentanwälte,
Theatinerstrasse 8
80333 München (DE)**

(56) References cited:
**EP-A- 1 179 918        US-A- 6 118 765
US-A1- 2002 150 098**

**Description**

Field of the Invention:

The present invention relates to a packet transmission system for transmitting a packet and a packet reception system for receiving a packet. More specifically, the present invention mainly relates to a packet transmission system for transmitting a wireless packet from a wireless LAN (Local Area Network) base station or the like and a packet reception system for receiving a wireless packet at the wireless base station or the like.

Description of the Related Art:

A transport layer in a wired LAN is given a TCP (Transmission Control Protocol) for a packet arrival check function and a retransmission function and a UDP (User Datagram Protocol) for a packet notification function only. A transport layer in a wireless LAN according to IEEE (Institute of Electrical and Electronics Engineers) 802.11 is, by contrast, given a UDP for both the packet arrival check function and the retransmission in case of unicast packets. This is because the wireless LAN is higher in packet loss probability and lower in transmission reliability than the wired LAN, due to environmental factors such as radio wave noise and crossing of an obstruction. However, even the wireless LAN is not given the packet arrival check function and the retransmission function in case of simultaneous packets such as multicast packets and broadcast packets.

To deal with the fact that even the wireless LAN is not given the packet arrival check function and the retransmission function in case of simultaneous packets such as multicast packets and broadcast packets, individual retransmission procedures can be established as disclosed in Japanese Patent Application Laid-open publication No. 2001-119751 and Japanese Patent Application Laid-open publication No. 2001-103557. However, in case of simultaneous packets based on a VoIP (Voice-over Internet Protocol) using RTP (Real-Time Transport Protocol), a delay in packet arrival causes degradation of communication quality.

Wireless LAN simultaneous packets are transmitted at a timing right after the transmission of beacons from a base station to a wireless zone at certain intervals. Normally, the beacons are transmitted at intervals of about 100 milliseconds. It is known that if the beacon transmission interval is made short, transmission efficiency is deteriorated or the packets cannot be transmitted because of the overhead of beacons. Accordingly, it sometimes is at most about 100 milliseconds since a bridge section at the base station starts transmission control until a packet is actually transmitted to the wireless zone. As a result, in a case where an arrival check packet is not returned in the next interval, it is at least about 100 milliseconds and at most 200 milliseconds since the bridge section at the base station starts transmission control until a retransmission packet is unicasted, and it is at least about 200 milliseconds and at most 300 milliseconds since the bridge section at the base station starts transmission control until a simultaneous packet is retransmitted. If such a transmission delay occurs and the higher level packet to be transmitted is, for example, a voice RTP packet, then a jitter and a noise such a sound skip may possibly occur on the reception terminal side.

In US patent 6,118,765, a system for eliminating unnecessary retransmissions of data from being sent from a terminal is disclosed. Data packets are received from a host computer. Based on an estimated round trip time it is determined whether a data packet is a new data packet, a valid retransmitted data packet or an unnecessary retransmitted data packet. New data packets and valid retransmitted data packets, i.e. out-of-order data packets, are forwarded to a remote terminal. Unnecessary retransmitted data packets are discarded.

In US patent application 2002/0 150 098, a method for using multicast packet addressing for use by base stations in wireless local area networks communicating with wireless local mobile units is disclosed. The method provides establishing communication and association between the mobile units and access points utilizing a packet frame addressing protocol including a multicast address, receiving in one of the access points at least two distinct sequences of packets addressed to at least two mobile units respectively associated with the access points, forming a frame, with a multicast address including the addresses of the at least two mobile units, in the access point and including in the data field of said frame unicast packets addressed to each of the at least two mobile units, and transmitting the frame to the mobile units by the one access point.

SUMMARY OF THE INVENTION

It is, therefore, an object of the present invention to provide a simultaneous packet transmission system and a simultaneous packet reception system which enable a reception side to receive a normal simultaneous packet without the need for the reception side to transmit a simultaneous packet retransmission request even if part of simultaneous packets are discarded.

According to the present invention, there is provided a packet transmission system as defined in claim 1 and a packet reception system as defined in claim 12.

According to a first aspect of the present invention, there is provided a packet transmission system comprising: packet identification information addition means for adding packet identification information to a packet to be transmitted; and transmission means for transmitting said packet with said packet identification information a plurality of times even if the packet transmission system does not receive a retransmission request from a reception side characterized in that said packet identification information addition means is configured to add said packet identification information belonging to a layer between a second OSI layer and a third OSI layer of the packet to be transmitted.

The packet transmission system may further comprise: compression means for deleting a header of a third OSI layer and a header of a fourth OSI layer of the packet to be transmitted, and for making data of a fifth OSI layer carried on a second OSI layer before adding the packet identification information to the packet to be transmitted.

In the packet transmission system, said packet may be any one of a multicast packet and a broadcast packet.

In the packet transmission system, said transmission means may transmit said packet allocated said packet identification information and a redundant packet which is a duplicate of said packet allocated said packet identification information.

In the packet transmission system, said packet identification information addition means may add one said packet identification information to each of a plurality of packets to be transmitted.

The packet transmission system may further comprise: reception means for receiving information on a simultaneous packet loss frequency at the reception side per certain period, wherein said transmission means may change a transmission parameter based on said information on the simultaneous packet loss frequency.

In the packet transmission system, said transmission means may transmit said packet allocated said packet identification information, with a MAC (Media Access Control) address common to a plurality of reception devices set as a destination address.

The packet transmission system may further comprise: means for retransmitting said packet if the packet transmission system does not receive an acknowledgement of transmission of said packet.

The packet transmission system may further comprise: determination means for determining whether information equal in type to the packet identification information to be added by the packet identification information addition means is already added to said packet to be transmitted, wherein, if a determination result of said determination means is positive, said packet to be transmitted may be transmitted while bypassing said packet identification information addition means and said transmission means.

According to a second aspect of the present invention, there is provided a wireless LAN base station comprising the packet transmission system according to the first aspect of the present invention.

According to a third aspect of the present invention, there is provided a conference server comprising the packet transmission system according to the first aspect of the present invention.

According to a fourth aspect of the present invention, there is provided a packet reception system comprising: reception means capable of receiving packets with the same packet identification information once or a plurality of times without a retransmission request; determination means for determining whether the reception means receives the packets with the same packet identification information the plurality of times or not; and discard means for leaving only one of the same packets and discarding the other packets if a determination result of said determination means is positive characterized in that said packet identification information belongs to a layer between a second OSI layer and a third OSI layer of the packet received.

In the packet reception system, each of said packets received may have a structure in which data of a fifth OSI layer is directly carried on a second OSI layer, and the packet reception system may further comprise restoration means for restoring a header of a third OSI layer and a header of a fourth OSI layer of each of said packets received by storing inalterable parts of the two headers in advance and adding the inalterable parts of the two headers to a received packet.

In the packet reception system, each of said packets may be any one of a multicast packet and a broadcast packet.

In the packet reception system, each of said packets may include a plurality of higher level packets.

The packet reception system may further comprise: counting means for counting a multicast or broadcast packet loss frequency per certain period; and transmission means for transmitting information on said multicast or broadcast packet loss frequency.

The packet reception system may further comprise: holding means for holding a MAC address which is common to a plurality of reception devices, wherein said reception means may receive said packets having said MAC address as a destination MAC address.

The packet reception system may further comprise: response means for transmitting an acknowledgment to a sender when said packets are received.

According to a fifth aspect of the present invention, there is provided a packet transmission and reception system comprising: the packet reception system; detection means for detecting whether said reception means have received the same packets at least once or have not receive the same packets at all; and means for causing a plurality of higher level packets to be included in a packet to be transmitted based on a frequency with which said reception means have not receive the same packets at all.

According to a sixth aspect of the present invention, there is provided a wireless LAN terminal comprising the packet reception system.

According to a seventh aspect of the present invention, there is provided a wired LAN terminal comprising the packet reception system.

According to a eighth aspect of the present invention, there is provided a wireless LAN terminal comprising the packet transmission and reception system.

According to a ninth aspect of the present invention, there is provided a wired LAN terminal comprising the packet transmission reception system.

BRIEF DESCRIPTION OF THE DRAWINGS

Fig. 1 is a first block diagram illustrating the configurations of a higher network, a wireless LAN base station, and a wireless LAN terminal in a first embodiment of the present invention;
Fig. 2 is a sequence diagram illustrating a packet transmission sequence among the higher network, the wireless LAN, base station and the wireless LAN terminal in the first embodiment of the invention;
Fig. 3 is a flow chart illustrating processings performed by respective constituent elements of the wireless LAN terminal in the first embodiment of the invention;
Fig. 4 is a format diagram illustrating the formats of packets transmitted by the wireless LAN terminal in the first embodiment of the invention;
Fig. 5 is a sequence diagram illustrating messages exchanged between the wireless LAN base station and the wireless LAN terminal when a new wireless LAN terminal is added in a second embodiment of the invention;
Fig. 6 is a second block diagram illustrating the configurations of a higher network, a wireless LAN base station, and a wireless LAN terminal in a third embodiment of the invention;
Fig. 7 is a format diagram illustrating the first format of a packet transmitted by the wireless LAN terminal in the third embodiment of the invention;
Fig. 8 is a format diagram illustrating the second format of a packet transmitted by a wireless LAN terminal in a fourth embodiment of the invention;
Fig. 9 is a conceptual view illustrating pseudo-unicast in a fifth embodiment of the invention;
Fig. 10 is a block diagram illustrating the configuration of a conference system in a sixth embodiment of the invention;
Fig. 11 is a flow chart illustrating the operation of a wireless LAN base station in the sixth embodiment of the invention;
Fig. 12 is a conceptual view illustrating a wireless LAN system and a wired network equipment connected to the wireless LAN system in a seventh embodiment of the present invention;
Fig. 13 is a conceptual view illustrating a transmission path in the seventh embodiment of the invention;
Fig. 14 is a block diagram illustrating the configuration of an access point device in the seventh embodiment of the invention;
Fig. 15 is a block diagram illustrating the configuration of a wireless terminal in the seventh embodiment of the invention
Fig. 16 is a sequence diagram for explaining operations in the seventh embodiment of the invention;
Fig. 17 is a format diagram illustrating the formats of packets in the seventh embodiment of the invention;
Fig. 18 is a sequence diagram for explaining operations in a eighth embodiment of the present invention;
Fig. 19 is a format diagram illustrating the formats of packets in the eighth embodiment of the invention;
Fig. 20 is a conceptual view illustrating a transmission path in a ninth embodiment of the invention;
Fig. 21 is a sequence diagram for explaining operations in the ninth embodiment of the invention;
Fig. 22 is a format diagram illustrating the formats of packets in the ninth embodiment of the invention;
Fig. 23 is a conceptual view illustrating a transmission path in a tenth embodiment of the invention;
Fig. 24 is a block diagram illustrating the configuration of a wireless terminal in the tenth embodiment of the invention;
Fig. 25 is a block diagram illustrating the configuration of an access point device in the tenth embodiment of the invention;
Fig. 26 is a sequence diagram for explaining operations in the tenth embodiment of the invention; and
Fig. 27 is a format diagram illustrating the formats of packets in the tenth embodiment of the invention.

DESCRIPTION OF THE PREFERRED EMBODIMENTS

Embodiments of the present invention are intended to compensate for the loss of a simultaneous packet and improve communication quality in multicast or broadcast communication in a wireless LAN, particularly VoIP-based communication from a wireless LAN base station (hereinafter, "base station") to a wireless LAN terminal (hereinafter, "terminal") by using a redundant packet.

The base station allocates packet identification information to a simultaneous packet, and transmits the packet identification information-allocated simultaneous packet and a redundant packet equal to the simultaneous packet in packet identification information and content. The redundant packet may be transmitted plural times. The terminal has a module that interprets the packet identification information of a received simultaneous packet. If the terminal receives a simultaneous packet equal in packet identification information to the packet that the terminal received just before the simultaneous packet, the terminal discards the currently received simultaneous packet. The terminal, therefore, accepts only a simultaneous packet allocated updated packet identification information.

As the packet identification information, a sequence number, for example, is used. As the sequence number, a number increasing one by one to modulus another certain number (e.g., 256) is used for each packet. Although other than sequence number such as a gray code may be used as packet identification information, the embodiments will be described hereinafter on the assumption that the packet identification information is a sequence number.

[FIRST EMBODIMENT]

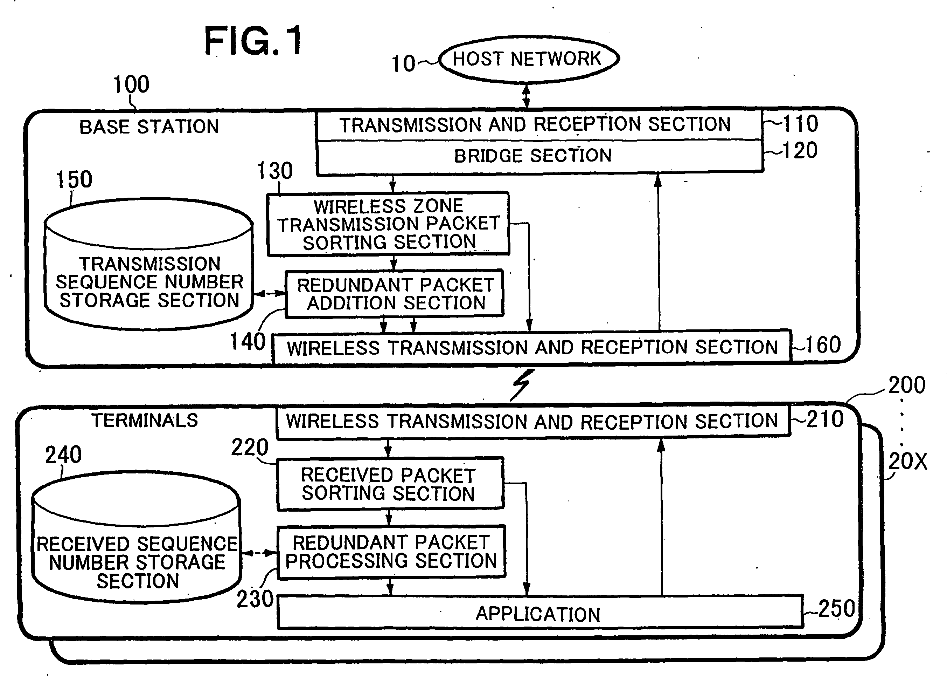

Referring to Fig. 1, a wireless LAN system in the first embodiment includes a base station 100 and terminals 200 to 20X.

The base station 100 includes a wireless zone transmission packet sorting section 130, and a redundant packet addition section 140. The wireless zone transmission packet sorting section 130 determines, if a packet acquired from a higher network 10 through a transmission and reception section 110 and a bridge section 120 or a packet acquired from a wireless zone through a wireless transmission and reception section 160 and the bridge section 120 is transmitted to the terminal 200 (or a plurality of terminals 200 to 20x), whether to transmit the packet in a simultaneous packet form by multicast or broadcast or in a unicast form. If the sorting section 130 has determined that the packet should be transmitted in the simultaneous packet form, then the redundant packet addition section 140 acquires a new sequence number obtained by increasing the sequence number stored in a transmission sequence number storage section 150, and transmits both a simultaneous packet including the new sequence number as well as a LAN packet or a higher level packet and a redundant packet which is a duplicate of the simultaneous packet to the wireless zone through the wireless transmission and reception section 160.

Each of the terminals 200 to 20X includes a received packet sorting section 220 and a redundant packet processing section 230. The received packet sorting section 220 identifies whether the packet received from the wireless transmission and reception section 210 is allocated a sequence number. The redundant packet processing section 230 compares the sequence number with a sequence number stored in a received sequence number storage section 240, and discards the received packet if they are equal, or supplies the LAN packet or higher level packet included in the received packet if the sequence number is a new sequence number to an application 250.

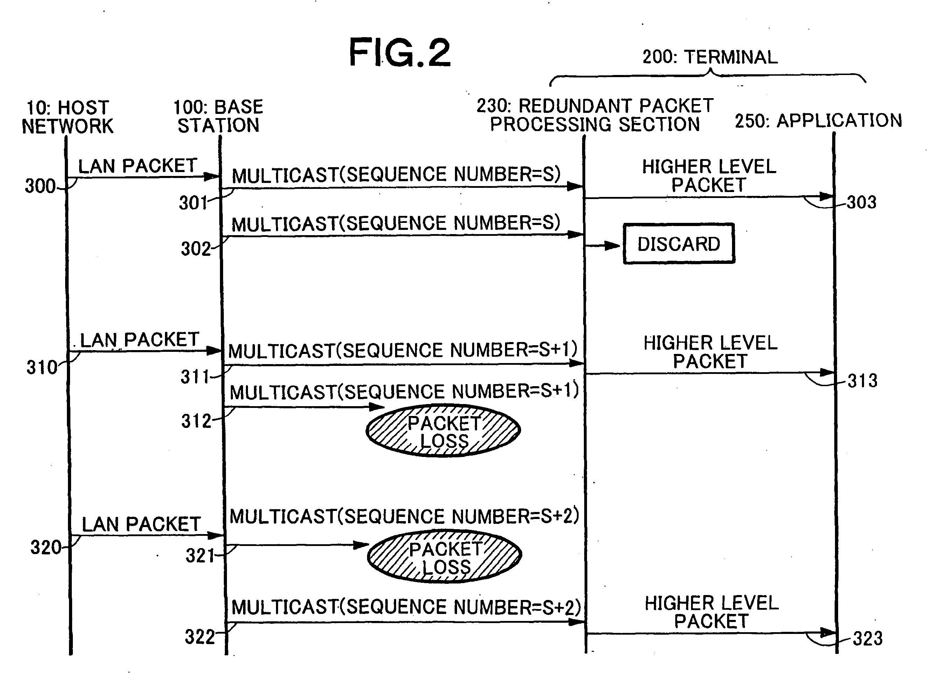

Fig. 2 illustrates that the base station 100 relays the transmission of the simultaneous packet from the higher network 10 to the terminal 200.

First, the base station 100 which receives a LAN packet 300 from the higher network 10 transmits a simultaneous packet 301 and a redundant packet 302 which is a duplicate of the simultaneous packet 301 to a wireless zone. In this step, since it is assumed that no transmission error occurs, both the simultaneous packet 301 and the redundant packet 302 arrive at the terminal 200. The redundant packet processing section 230 determines that the sequence number of the simultaneous packet 301 is new, and notifies the application 250 of the LAN packet or higher level packet 303 included in the simultaneous packet 301. The terminal 200 receives the redundant packet 302 next. The terminal 200 determines that the sequence number of the redundant packet 302 is equal to that of the previously received simultaneous packet 301 and discards the received redundant packet 302.

Next, the base station 100 which receives a LAN packet 310 from the higher network 10 transmits a simultaneous packet 311 and a redundant packet 312 which is a duplicate of the simultaneous packet 311 to the wireless zone. In this step, it is assumed that a transmission error occurs to the redundant packet 312 and only the simultaneous packet 311 arrives at the terminal 200. The redundant packet processing section 230 recognizes only the simultaneous packet, and notifies the application 250 of a LAN packet or higher level packet 313 included in the simultaneous packet 311.

Next, the base station 100 which receives a LAN packet 320 from the higher network 10 transmits a simultaneous packet 321 and a redundant packet 322 which is a duplicate of the simultaneous packet 322 to the wireless zone. In this step, it is assumed that a transmission error occurs to the simultaneous packet 321 and only the redundant packet 322 arrives at the terminal 200. The redundant packet processing section 230 recognizes only the redundant packet 322, and notifies the application 250 of a LAN packet or higher level packet 323 included in the redundant packet 322.

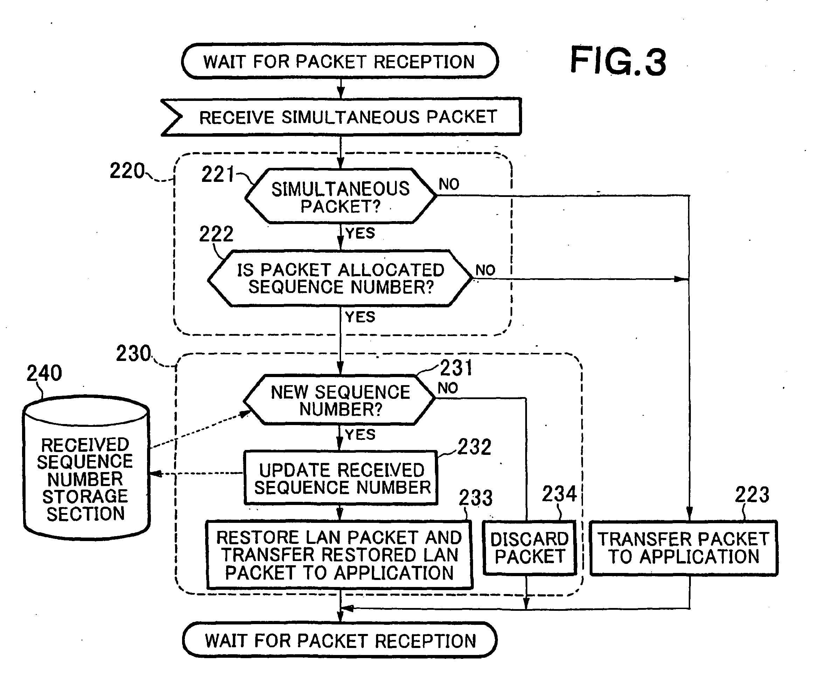

Fig. 3 illustrates the processing flows of the received packet sorting section 220 and the redundant packet processing section 230 in each of the terminals 200 to 20X. The received packet sorting section 220 determines whether the received packet is a simultaneous packet at a step 221, and determines whether the simultaneous packet is allocated a sequence number at a step 222. If the determination results at the steps 221 and 222 are both positive, the received packet sorting section 220 hands over its processing to the redundant packet processing section 230. The redundant packet processing section 230 compares the sequence number stored in the received sequence number storage section 240 with the sequence number of the simultaneous packet, thereby determining whether the sequence number of the received simultaneous packet is new at a step 231. The redundant packet processing section 230 discards the packet allocated the sequence number equal to that stored in the storage section 240 ("NO" at the step 231, and a step 234), and accepts only the packet allocated a new sequence number. At a step 232, the redundant packet processing section 230 overwrites the sequence number on the received sequence number storage section 240. At a step 233, the redundant packet processing section 230 restores a LAN packet included in the received simultaneous packet or a LAN packet including a higher level packet and transfers the restored LAN packet to the application 250. If the received packet is not a simultaneous packet or if the received packet is a simultaneous packet and is not allocated a sequence number, then the redundant packet processing section 230 transfers the received packet to the application as it is (at a step 223).

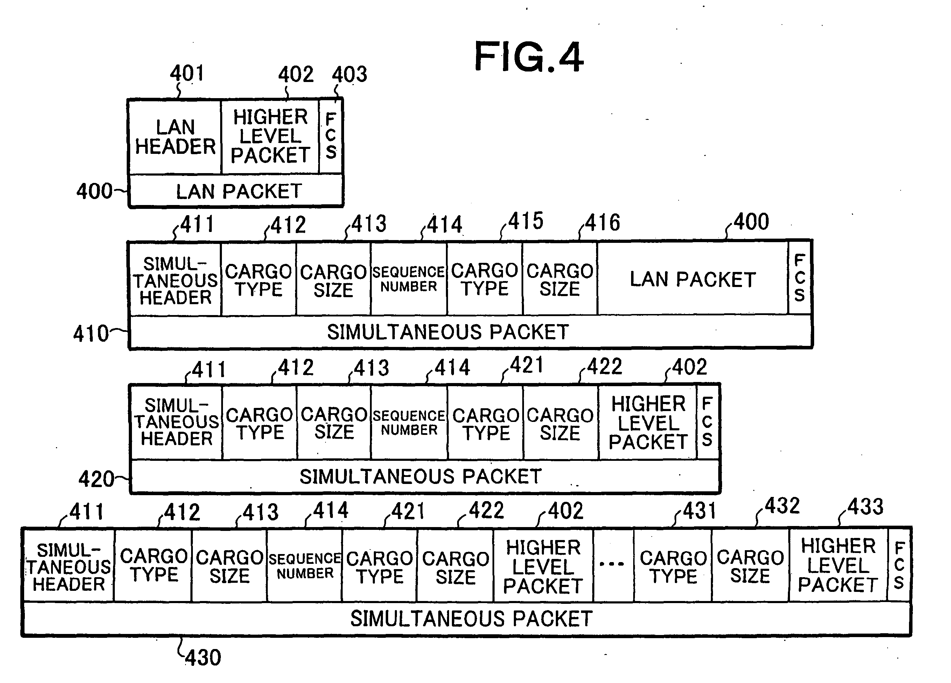

Packets denoted by reference symbols 410, 420, and 430 shown in Fig. 4 are concrete examples of simultaneous packets allocated sequence numbers.

A LAN packet 400 is, for example, an ordinary packet transmitted from the higher network 10 to the base station 100. The LAN packet 400 consists of a LAN header 401, a higher level packet (a payload of the LAN packet 400) 402, and an FCS (Frame Check Sequence) 403. The LAN packet 400 itself may be either a simultaneous packet or a unicast packet.

The LAN packet 400 is in the second layer of OSI whereas the higher level packet is in the third or higher layer of OSI.

The simultaneous packet 410 is the simplest example of adding a sequence number 414 to the LAN packet 400. The sequence number 414 and the LAN packet 400 are encapsulated in the simultaneous packet 410. A Cargo type 412 indicates that the encapsulated data is a sequence number and a Cargo size 413 represents the data length of the encapsulated sequence number. A cargo type 415 indicates that the encapsulated information is a LAN packet and a Cargo size 416 represents the data length of the encapsulated LAN packet.

A simultaneous header 411 is a header to which a simultaneous bit is set and in which a group MAC address is described.

The simultaneous packet 420 is an example of compressing the simultaneous packet 410 by deleting the LAN header 401 and the FCS 403. Cargo types 412 and 421 indicate that pieces of encapsulated data are the sequence number 414 and the higher level packet (or payload) 402 of the LAN packet, respectively. Cargo sizes 413 and 422 represent data lengths of the sequence number 414 and the higher level packet 402, respectively.

The simultaneous packet 430 is an example of encapsulating a plurality of higher level packets that are transmitted from the higher network 10 to the base station 100 in a unicast form into one simultaneous packet. If a plurality of terminals are present, a plurality of higher level packets in the unicast form to be addressed to the respective terminals are encapsulated into one simultaneous packet 430, so that the higher level packets can be transmitted to the respective terminals using one simultaneous packet 430. That is, higher level packets 402 and 433 are addressed to different terminals. The base station 100 encapsulates the higher level packets addressed to the different terminals into one simultaneous packet and multicasts the simultaneous packet 430 to the terminals. Each of the respective terminals extracts only the higher level packet addressed thereto among those included in the simultaneous packet 430. This will be described later in seventh to tenth embodiments.


[SECOND EMBODIMENT]

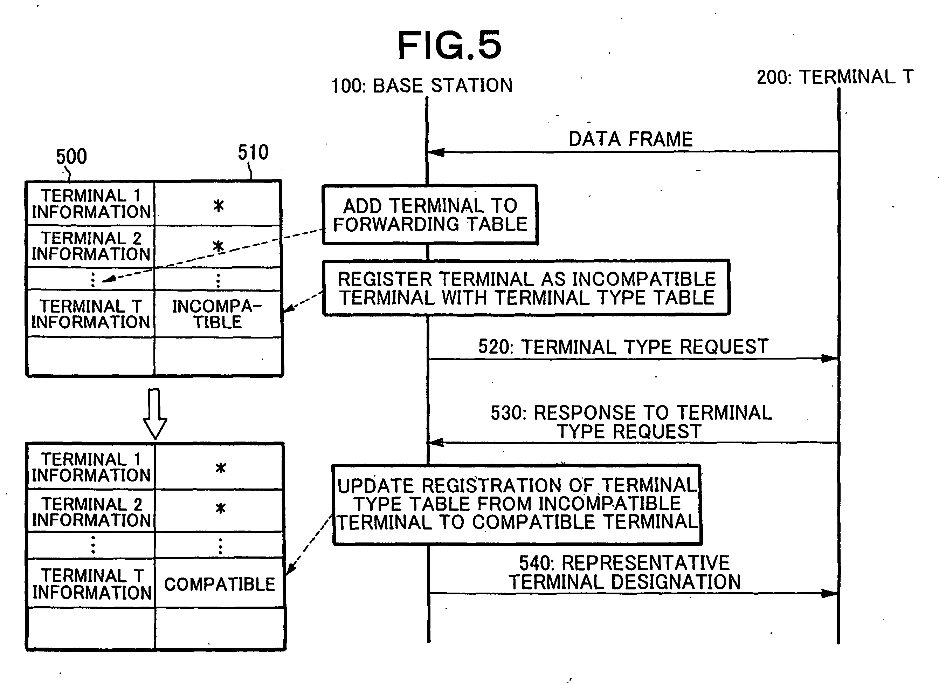

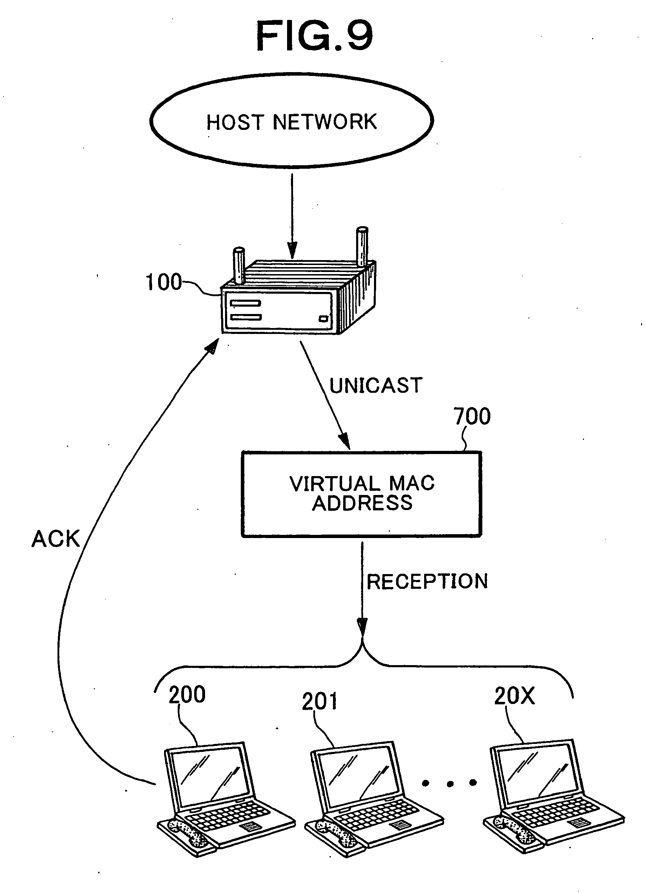

The second embodiment shown in Fig. 5 illustrates an example of the negotiation between a base station and each terminal on the assumption that a terminal which is not compatible with the wireless LAN system of the present invention is mixed into the system. If the base station 100 recognizes connection with a new terminal 200, the base station 100 records information (a MAC address and the like) on the terminal 200 in a forwarding table 500 first to enable holding a communication with the new terminal 200, and then registers that the terminal 200 is "incompatible" with this LAN system in a terminal type table 510. The base station 100 then transmits a terminal type request 520 to the terminal 200. The terminal type request 520 may take, for example, a form dedicated to a terminal compatible with this system in which data unique to the present invention is set to a SNAP (Sub Network Access Protocol). When recognizing the terminal type request 520, the terminal 200 transmits to the base station 100 a response 530 to the terminal type request 520 in order to inform that the terminal 200 is compatible with the system. The base station 100 which receives the response 530 determines that the terminal 200 is compatible with this system and updates the content of the terminal type table 510 from "incompatible" to "compatible", and determines that later packets addressed to the terminal 200 may be encapsulated into the simultaneous packet 430 allocated the sequence number. Representative terminal designation 540 is an example of further notifying the terminal compatible with this system of additional information, which will be described later with reference to Fig. 9.

If a packet in the unicast form to be addressed to the terminal compatible with this system is transmitted from the higher network 10 to the base station 100, the base station 100 generates a simultaneous packet 430 (see Fig. 4) which includes packets in the unicast form to be addressed to different terminals compatible with this system, and simultaneously transmits the simultaneous packet 430 to the different terminals compatible with this system. The respective terminals extract only the packets addressed thereto from the simultaneous packet. The terminal incompatible with this system cannot extract only the packet addressed thereto from such a simultaneous packet. Due to this, if the packet in the unicast form to be addressed to the terminal incompatible with this system is transmitted from the higher network 10 to the base station 100, the base station 100 unicasts the packet to the terminal. Accordingly, it is necessary to determine whether packets which are unicast to the respective terminals if obeying the related art can be multicast according to the present invention for each terminal and, therefore, it is necessary to recognize whether each terminal is compatible with this system as stated above.

[THIRD EMBODIMENT]

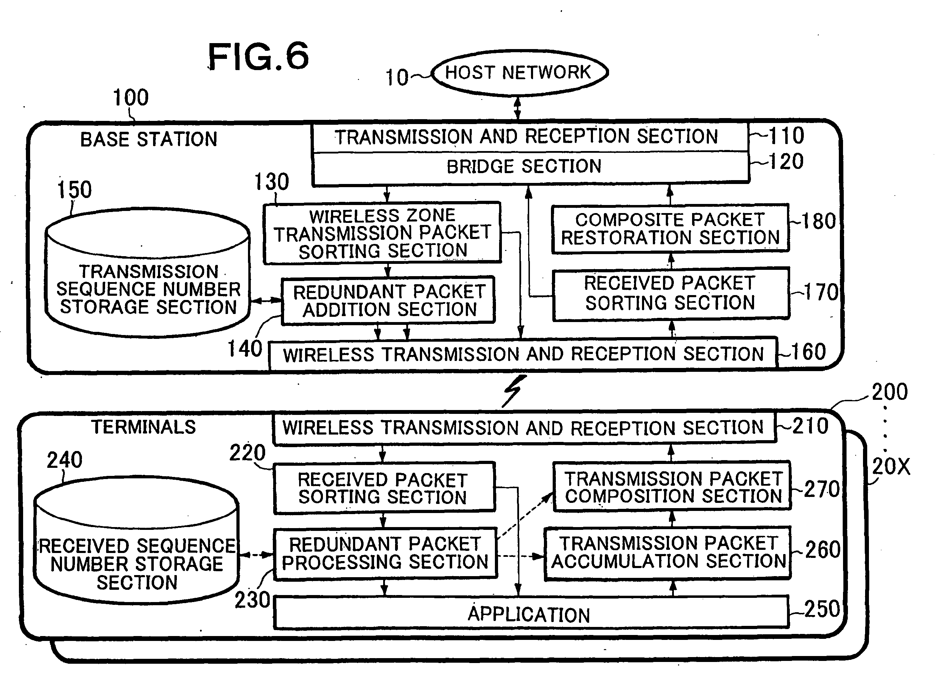

The third embodiment shown in Fig. 6 provides an example of a method for switching over broadcast section according to a wireless band since the number of packets increases due to the presence of redundant packets and the increase packets cause congestion in the wireless band.

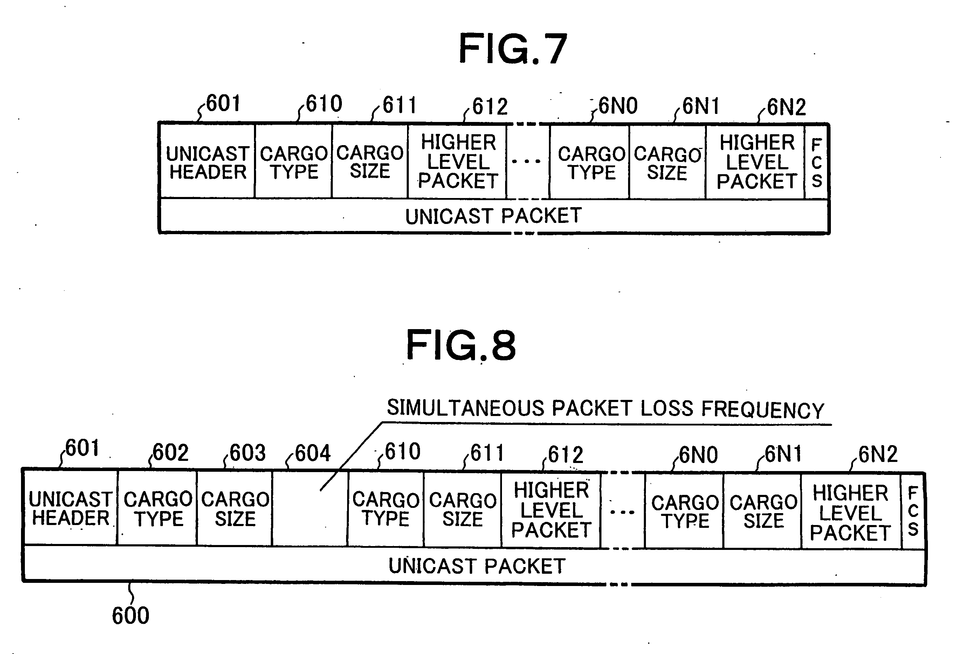

The redundant packet addition section 140 of the base station 100 adds periodically increased sequence number to a simultaneous packet and a redundant packet, whenever the simultaneous packet is transmitted. The redundant packet processing section 230 of the terminal 200 determines whether the received packet is a new packet while referring to the received sequence number storage section 240. If the received packet is a new packet but the sequence number of the packet is not continuous to any sequence numbers of the packets received so far, the redundant packet processing section 240 recognizes that both the simultaneous packet and the redundant packet are completely lost. The redundant packet processing section 230 which recognizes the complete packet loss issues an instruction to suppress the transmission of packets to the transmission packet accumulation section 260 and the transmission packet composition section 270 if a packet loss frequency exceeds a predetermined frequency. In response to the instruction, the transmission packet accumulation section 260 starts causing the transmission LAN packets to stay for certain time. The transmission packet composition section 270 composes the transmitted LAN packets that have stayed for certain time into one or a few unicast packets as shown in Fig. 7, and transmits the composite unicast packet to the base station 100 through the wireless transmission and reception section 210. At the base station 100, the wireless transmission and reception section 160 passes the received packet to the received packet sorting section 170. The received packet sorting section 170 determines whether the received packet is a composite unicast packet or not. If the sorting section 170 determines that the received packet is a composite unicast packet, the composite packet restoration section 180 restores the composite packet to original LAN packets and passes the restored LAN packets to the bridge section 120. By doing so, traffic between the terminal and the base station is decreased and packet loss is decreased after the complete packet loss due to the congestion of the wireless band was caused. Namely, an upstream wireless communication (a wireless communication in a direction from the terminal to the base station) and a downstream wireless communication (a wireless communication in a direction from the base station to the terminal) share the same wireless channels. Therefore, by decreasing the traffic of the upstream communication, the congestion of the downstream communication is alleviated.

[FOURTH EMBODIMENT]

In the fourth embodiment shown in Fig. 8, the preceding embodiments are improved and each of the terminals 200 to 20X notifies the base station 100 of a packet loss occurrence frequency. Fig. 8 illustrates an example of a composite unicast packet 600 transmitted from the terminal 200 or the like to the base station 100. A Cargo type 602 indicates that a simultaneous packet loss frequency 604 is included in the composite unicast packet. A Cargo size 603 represents the size of the simultaneous packet loss frequency 604. The simultaneous packet loss frequency 604 is the number of lost sequence numbers of simultaneous packets received within a certain period while the terminal was causing transmission packets to stay. When counting the number of the lost sequence numbers, both of or one of the number of complete packet losses and the number of one-packet losses is counted. For example, if one redundant packet is added to one simultaneous packet at the base station, the simultaneous packet loss frequency may be calculated as given by the following equation (1).

$$\text{Broadcast loss frequency}$$

$$= \text{one-sequence number loss frequency}$$

$$+ \quad (2 \times \text{complete sequence number loss frequency}) \qquad \dots (1).$$

In the equation (1), "one-sequence number loss frequency" is the number of times when only one of the simultaneous packet and the redundant packet is lost, and "complete sequence number loss frequency" is the number of times when both the simultaneous packet and the redundant packet are lost.

The base station which recognizes the simultaneous packet loss frequency may have the following handling functions. If there is a spare wireless band, then the base station increases "the number of redundant packets per simultaneous packet" (an example of "transmission parameter") . If there is not a spare wireless band, then the base station causes the simultaneous packet to stay and increases the composition rate of the composite unicast packet denoted by reference numeral 600 in Fig. 8 (the number of higher level packets per composite unicast packet) (an example of "transmission parameter"), sets "the number of redundant packets" (an example of "transmission parameter") at zero, sets "the number of composite unicast packets) (in case of "transmission parameter") at zero (discards the composite unicast packets), or does the other things.

It is noted that the composite unicast packet 600 includes a unicast header 601, Cargo types 610 and 6N0, Cargo sizes 611 and 6N1, and higher level packets 612 and 6N2 besides the Cargo type 602, the Cargo size 603, and the simultaneous packet loss frequency data 604.

[FIFTH EMBODIMENT]

In the fifth embodiment shown in Fig. 9, the LAN system performs simultaneous packet transmission using pseudo-unicast so that a prompt retransmission processing is ensured even if all packets having the same sequence number are lost.

That is, similarly to ordinary unicast, the terminal transmits an acknowledgement (ACK) to the base station if the pseudo-unicast in this embodiment is used and the terminal normally receives a packet. Due to this, if no acknowledgment is transmitted to the base station from the terminal, the base station can promptly start a retransmission processing. This cannot be realized by multicast. Further, even if the multicast is used for packet transmission, the base station can recognize a packet loss at higher application level and perform a retransmission processing. However, it takes long delay time in the retransmission processing at the higher application level using the multicast, whereas delay time generated in the retransmission processing using the pseudo-unicast is shorter.

The base station 100 notifies each of the terminals 200 to 20X compatible with this LAN system of a broadcasting virtual MAC address to be allocated thereto by a dedicated Cargo provided in the terminal type request 520 (see Fig. 5) in the negotiation with the terminal. Furthermore, the base station 100 defines a representative terminal for broadcasting by the representative terminal designation 540 (see Fig. 5). Only one representative terminal is designated by, for example, a method for designating a terminal connected to the base station 100 at the earliest time, a terminal having the lowest MAC address, or the like. Since the representative terminal sometimes changes partway, each terminal is set whether the terminal is a representative terminal or not during the reception of the simultaneous packet.

The virtual MAC address is notified in a multicast form. The simultaneous packet transmitted in the multicast form includes not only the virtual MAC address but also the representative terminal designation (designation based on the MAC address of the terminal or the like). Therefore, each terminal which receives the simultaneous packet is able to know whether the terminal is a representative terminal. Every terminal to which the virtual MAC address is multicast, holds the virtual MAC address, so that the terminal is able to receive not only a unicast packet addressed to an ordinary MAC address but also a unicast packet having a virtual MAC address as a destination MAC address.

When the base station 100 is to transmit the simultaneous packet to each of the terminals 200 to 20X compatible with this LAN system, the base station 100 transmits the simultaneous packet as a pseudo-unicast having a virtual MAC address 700 designated during the negotiation as a destination MAC address. Each of the terminals 200 to 20X receives the packet addressed to the virtual MAC address 700 even if the packet is a unicast packet. The representative terminal 200 which receives the packet addressed to the virtual MAC address 700 pretends to be a terminal having the virtual MAC address 700 and transmits an acknowledgment (ACK) to the base station 100. If the acknowledgment (ACK) is not transmitted to the base station 100, the base station 100 retransmits the packet to the terminal similarly to ordinary unicast. Taking into considering that the representative terminal 200 may have been apart from the wireless cells of the base station 100, the representative terminal designation may be sent prior to the retransmission in order to designate another terminal as the representative terminal.

If the pseudo-unicast using the virtual MAC address is not performed, a group MAC address is used as a destination MAC address and a multicast flag is set in a header in a multicast packet.

[SIXTH EMBODIMENT]

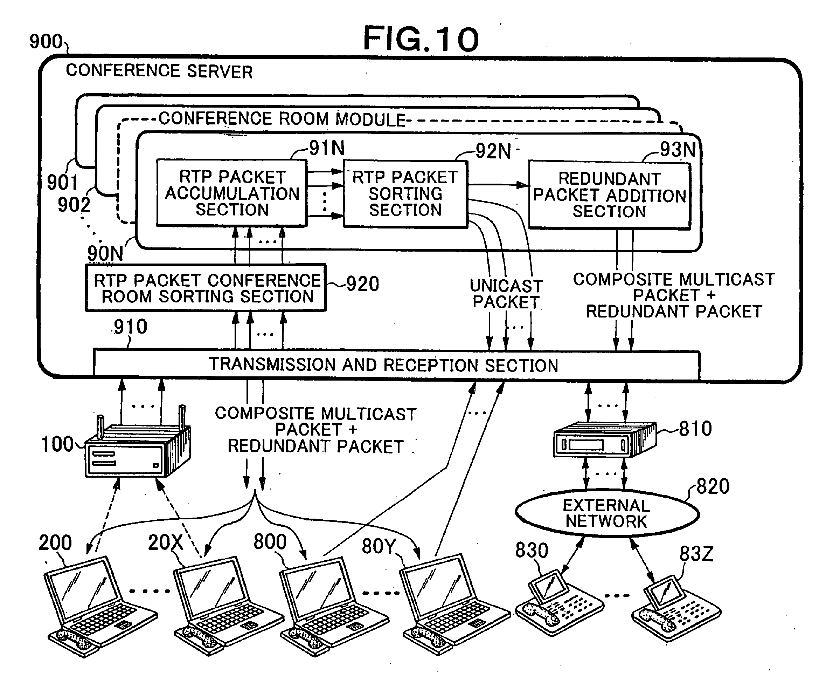

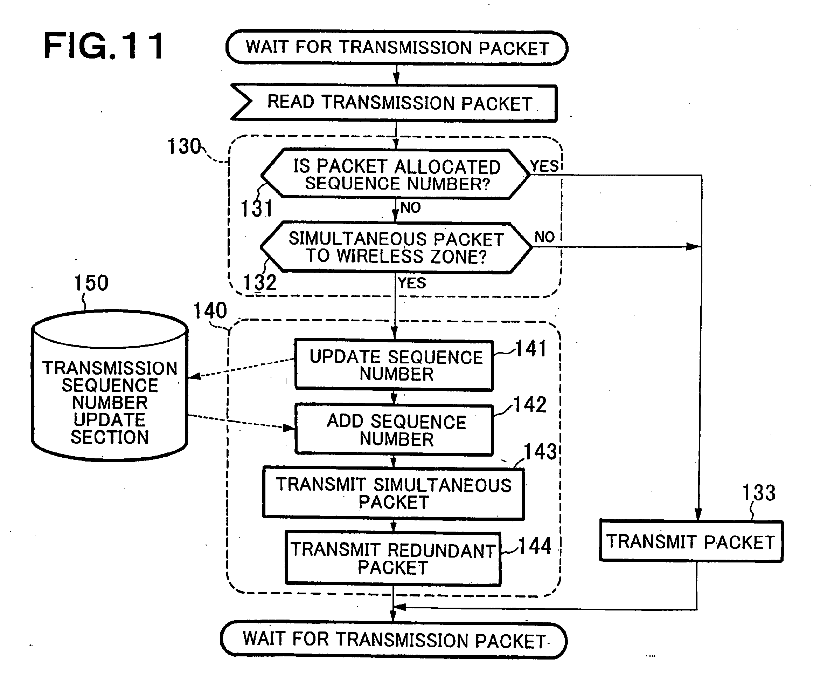

In the sixth embodiment shown in Fig. 10, the redundant packet is added not at the base station 100 but in the network higher than the base station. A conference server 900 is a device which realizes a conference conversation between remote terminals using the RTP for voice or moving images. In the conference server 900, conference room modules 901, 902, ..., and 90N organize respective conferences. The terminals 200 to 20X are wireless LAN terminals participating in the conference organized by the conference room module 90N through the base station 100. Terminals 800 to 80Y are wired LAN terminals participating in the conference organized by the conference room module 90N through wires. It is assumed herein that the LAN terminals 200 to 20X and 800 to 80Y are terminals compatible with the LAN system shown in Figs. 10 and 11. Although each of the wired LAN terminals 800 to 80Y does not communicate with the base station 100 and does not, therefore, receive sequence number-allocated simultaneous and redundant packets transmitted from the base station 100, the terminal receives sequence number-allocated simultaneous and redundant packets transmitted from the conference server 900. Accordingly, each of the wired LAN terminal 800 to 80Y includes the received packet sorting section 220, the redundant packet processing section 230, and the received sequence number storage section 240 shown in Fig. 1, and executes the method shown in Fig. 3. Terminals 830 to 83Z are terminals participating in the conference organized by the conference room module 90N through a router 810 and may not be compatible with the present LAN system. The conference server 900 hands over an RTP packet received through a transmission and reception section 910 to one of the conference modules using an RTP packet conference room sorting section 920. In this embodiment, the conference server 900 hands over the RTP packet to the conference room module 90N. The conference room module 90N temporarily stores the RTP packet thus handed over in an RTP packet accumulation section 91N before handing over the RTP packet to an RTP packet sorting section 92N. The RTP packet sorting section 92N hands over unicast RTP packets to be transmitted to the external network terminals 830 to 83Z not only to a router 810 but also to the redundant packet addition section 93N so as to transmit the unicast RTP packetsnot only to the external network terminals 830 to 83Z but also to the terminals 200 to 20X and 800 to 80Y. The redundant packet addition section 93N encapsulates the RTP packet thus handed over into a sequence number-allocated composite multicast packet (packet as shown in reference numeral 430 in Fig. 4), copies the composite multicast packet to a redundant packet, and broadcasts the composite multicast packet and the redundant packet to the LAN terminals (200 to 20X and 800 to 80Y) participating in the conference.
Referring next to Fig. 11, if the base station 100 which receives the sequence number-allocated composite multicast packet determines that the packet to be bridged is a sequence number-allocated multicast packet by the wireless zone transmission packet sorting section 130 ("YES" at a step 131), the base station transmits the composite multicast packet to the wireless zone as it is without handing over the packet to the redundant packet addition section 140.
If the determination result at the step 131 is "NO", the base station 100 determines whether the packet is a composite multicast packet to the wireless zone. If determining that the packet is a composite multicast packet to the wireless zone, the base station 100 transmits the simultaneous packet and the redundant packet each allocated an updated sequence number to the wireless zone at steps 141 to 144. If determining that the packet is not a composite multicast packet to the wireless zone, the base station 100 transmits the packets thereto as usual.
In this mechanism, the conference server 900 and the base station 100 may use different types of sequence numbers so as to be able to identify the sequence number added by the conference server 900 and that added by the base station 100, respectively. For example, the sequence number added by the conference server 900 is set at a number cyclically added up from 00H to FFH and that added by the base station 100 is set at a number cyclically added up from 100H to 1FFH. In this case, a received sequence number storage section 240 for each sequence number system is provided in the received sequence number storage section of each of the terminals 200 to 20X.

[SEVENTH EMBODIMENT]

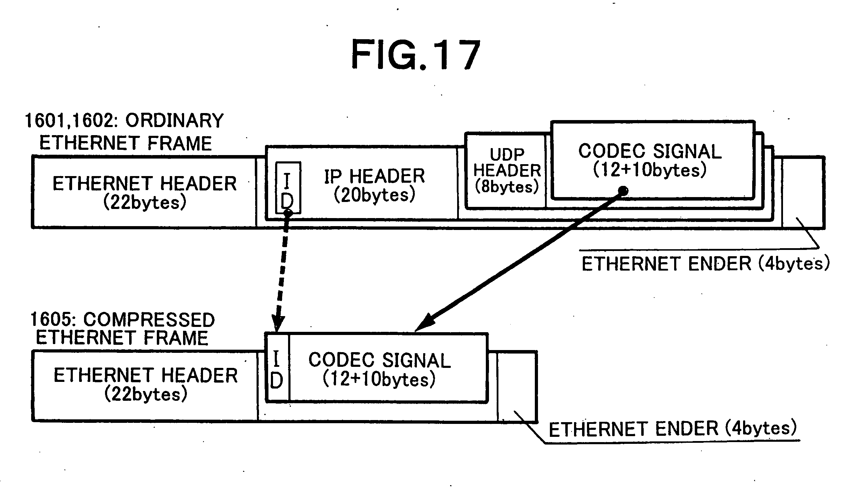

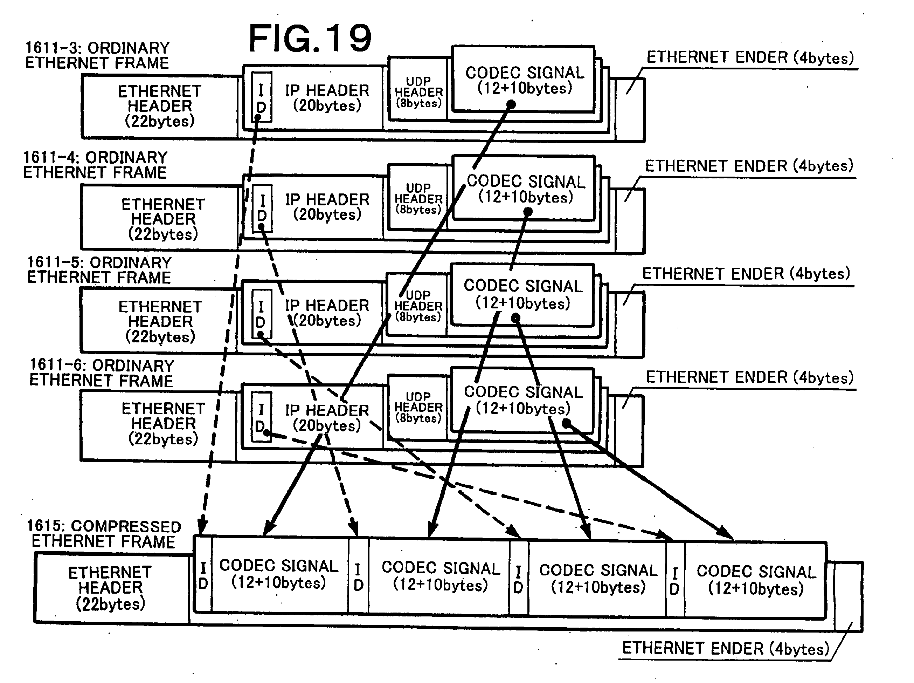

In seventh to tenth embodiments, a codec signal is directly inserted into a payload of an Ethernet ® frame without interposition of an IP packet and a UDP packet in the communication between an access point device and each wireless LAN terminal. The access point device in the seventh to tenth embodiments correspond to the base station in the first to sixth embodiments, respectively, and the wireless terminals in the seventh to tenth embodiments correspond to the terminals in the first to sixth embodiments, respectively.
By applying the seventh to tenth embodiments to the first to tenth embodiments, a higher level packet 402 shown in Fig. 4 is provided as a compressed Ethernet ® frame 1605 shown in Fig. 17. In addition, the higher level packets 402 and 433 shown in Fig. 4 are provided as codec signals in the compressed Ethernet ® frame 1615 shown in Fig. 19, respectively.

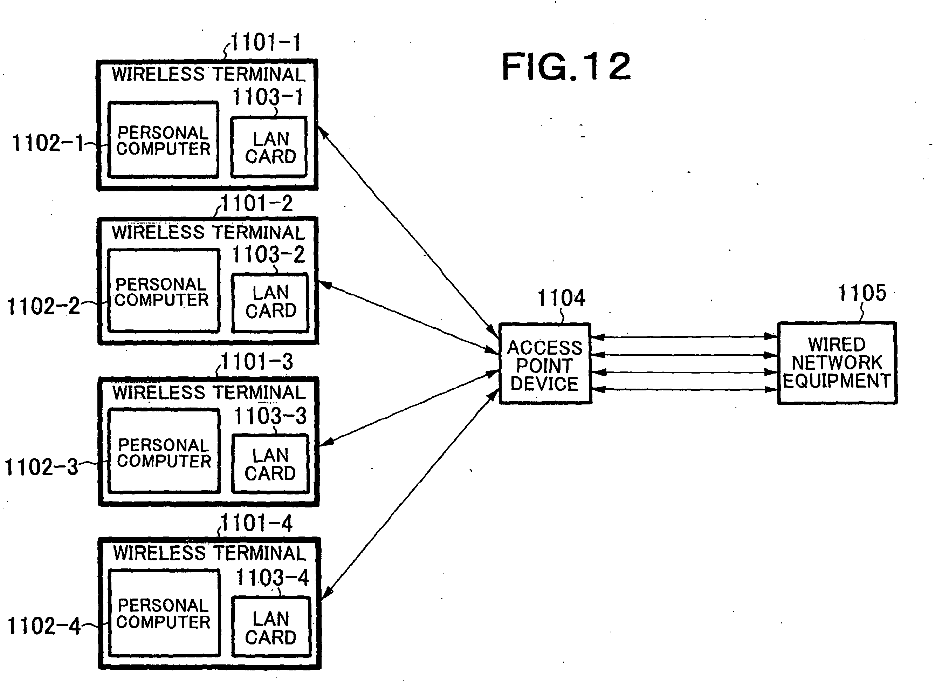

Fig. 12 illustrates a wireless LAN system in the seventh embodiment according to the present invention and a wired network equipment connected to the wireless LAN system.

Referring to Fig. 12, this wireless LAN system includes wireless terminals 1101-1 to 1101-4 and an access point device 1104. The access point device 1104 is connected to the wireless terminals 1101-1 to 1101-4 through a wireless LAN according to the standard of IEEE802.11a, IEEE802.11b or the like. Each wireless terminal 1101-i (where i = 1 to 4, which applies hereafter) includes a personal computer 1102-i and a wireless LAN card 1103-i connected to the personal computer 1102-i. The wired network equipment 1105 is connected to the access point device 1104 through a wired LAN. Each of the wireless terminals 1101-1 to 1101-4 and the wired network equipment 1105 has a codec mounted thereon, and the wired network equipment 1105 holds communication with the wireless terminals 1101-1 to 1101-4 for both of or one of video signals and voice signals (hereinafter, "codec signal") according to a protocol such as the RTP. Although not shown in the drawings, the wireless terminals communicate with different wired network equipment. The RTP is a protocol defined by RFC3267 and used for the communication of real-time data including voice and video signals. The RTP is utilized for an interactive service such as a media-on-demand or an Internet telephone. Further, the application of the invention is not limited to the RTP but the invention may be applied to other streaming-related protocols such as ST2, RTSP, MFTP and PMP and file communication protocols.

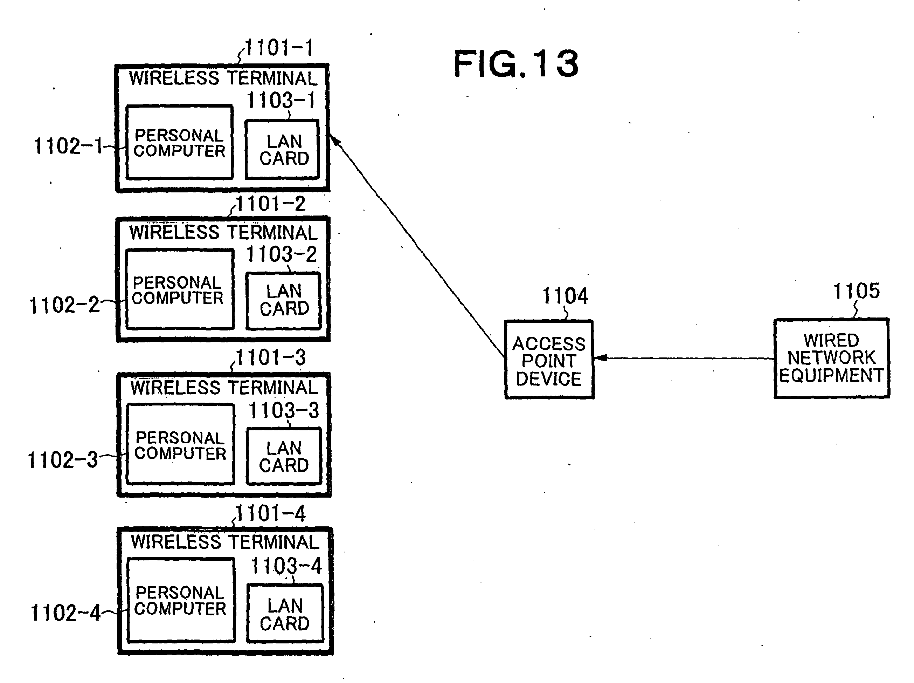

Next, an example in which one wireless terminal 1101-1 receives a codec signal from the wired network equipment 1105 through the access point device 1104 as shown in Fig. 13 will be described.

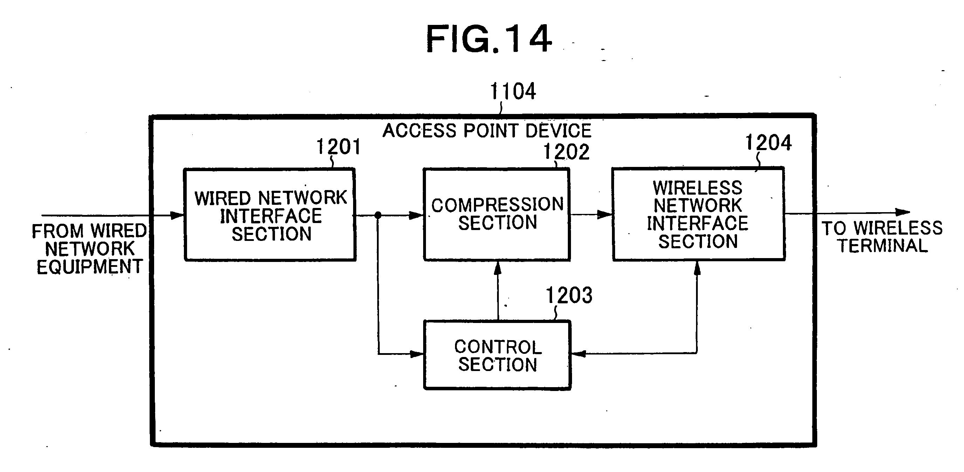

Fig. 14 is a conceptual view illustrating the important sections of the access point device 1104 related to the seventh embodiment. Referring to Fig. 14, the access point device 1104 includes a wired network interface section 1201, a compression section 1202, a control section 1203, and a wireless network interface section 1204. The wired network interface section 1201 receives an Ethernet ® frame (which encapsulates a codec signal thereinto with interposition of an IP packet and a UDP packet) from the wired network equipment 1105. The header compression section 1202 deletes an IP header and a UDP header from an ordinary Ethernet ® frame which includes the IP address (in the IP header) designated by a compression request, a protocol number (in the IP header), and a port number (in the UDP header), as will be described later, so as to directly encapsulate the codec signal into the Ethernet frame ® without interposition of the IP packet and the UDP packet, thereby making the Ethernet frame ® shorter. Namely, the header compression section 1202 makes the fifth layer of OSI carried directly on the second layer of OSI. The operation of deleting the IP header and the UDP header from the Ethernet ® frame which includes therein a codec signal so as to directly encapsulate the codec signal into the Ethernet frame ® without interposition of the IP packet and the UDP packet will be referred to as "Ethernet ® frame compression", and the Ethernet ® frame into which the codec signal is directly encapsulated without interposition of the IP packet and the UDP packet will be referred to as "compressed Ethernet ® frame" hereinafter. The control section 1203 controls the start of the Ethernet ® frame compression performed by the compression section 1202 based on a request from the wireless terminal 1101-1, and controls the end of the Ethernet ® frame compression based on the content of the received Ethernet ® frame. The wireless network interface section 1204 transmits the compressed Ethernet ® frame which encapsulates the codec signal thereinto to the wireless terminal 1101-1 while encapsulating the compressed Ethernet ® frame into a wireless LAN frame.

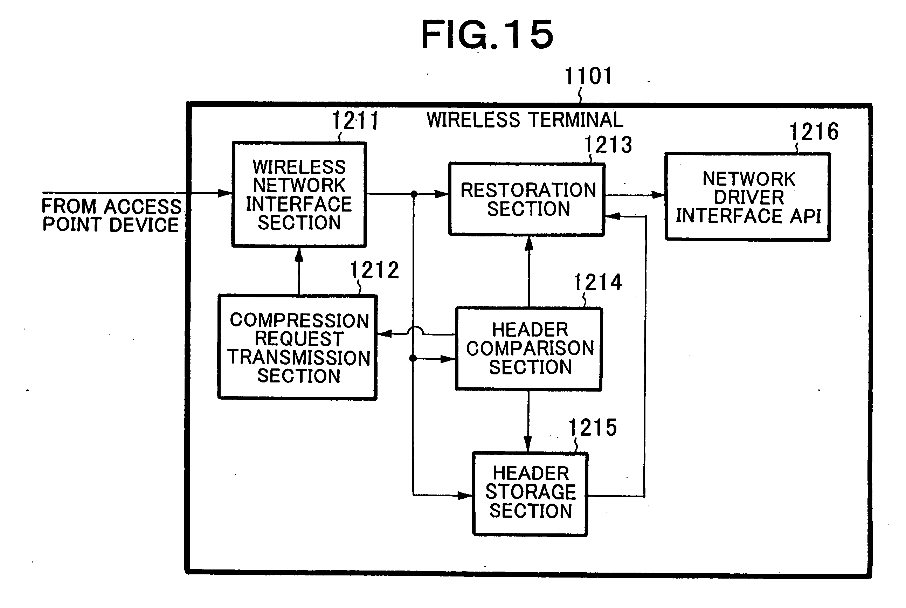

Fig. 15 is a conceptual view illustrating the important sections of the wireless terminal 1101 related to the seventh embodiment. Referring to Fig. 15, the wireless terminal 1101 includes a wireless network interface section 1211, a compression request transmission section 1212, a restoration section 1213, a header comparison section 1214, a header storage section 1215, and a network driver interface API (Application Program Interface) 1216. The wireless network interface section 1211 receives the wireless LAN frame from the access point device 1104. As will be described later, the header comparison section 1214 makes a predetermined comparison related to headers and the like, and determines whether to start compressing Ethernet ® frames based on the comparison result. The header storage section 1215 stores the IP header and the UDP header encapsulated into the present Ethernet ® frame if the header comparison section 1214 determines to start compressing Ethernet ® frames. The compression request transmission section 1212 transmits a compression request accompanied with designation of an IP address (in the IP header), a protocol address (in the IP header), and a port number (in the UDP header) to the control section 1203 of the access point device 1104. The restoration section 1213 adds the IP header and the UDP header stored in the header storage section 1215 to a region in front of the codec signal in the compressed Ethernet ® frame, thereby restoring the IP packet. The network driver interface API 1216 hands over the restored IP packet to a higher level layer.

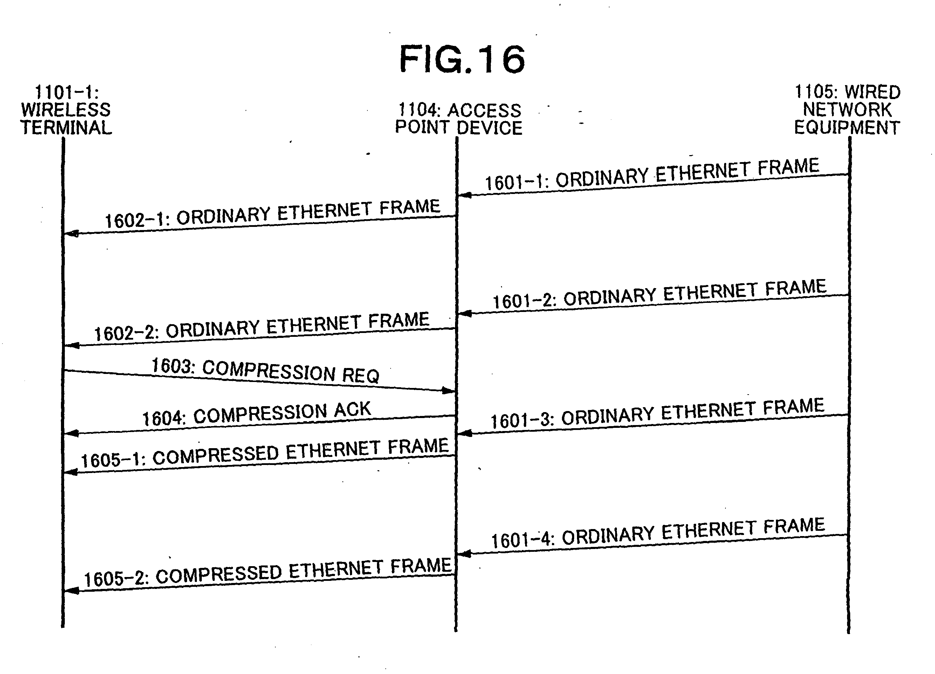

Fig. 16 is a sequence diagram illustrating the operations of the wireless terminal 1101-1, the access point device 1104, and the wired network equipment 1105 in the seventh embodiment. Referring to Fig. 16, the wired network equipment 1105 regularly transmits ordinary Ethernet ® frames 1601-1 to 1601-4 to the access point device 1104. The access point device 1104 transfers the ordinary Ethernet ® frames 1601-1 and 1601-2 to the wireless terminal 1101-1 as ordinary Ethernet ® frames 1602-1 and 1602-2. In addition, the header comparison section 1214 of the wireless terminal 1101-1 recognizes the reception of the ordinary Ethernet ® frames 1602-1 and 1602-2 each of which encapsulates thereinto a codec signal. Accordingly, the header storage section 1215 of the wireless terminal 1101-1 stores the IP header and the UDP header stored in the Ethernet ® frame 1602-2, and the compression request transmission section 1212 transmits a compression request (compression REQ) 1603 accompanied with designation of the IP address (in the IP header), the protocol number (in the IP header) and the port number (in the UDP header) described in the Ethernet ® frame 1602-2 to the access point device 1104. In response to the compression request 1603, the control section 1203 of the access point device 1104 transmits a compression acknowledgement (compression ACK) 1604 to the wireless terminal 1101-1. Thereafter, the compression section 1202 of the access point device 1104 compresses the ordinary Ethernet ® frames 1601-3 and 1601-4, and the wireless network interface section 1204 of the access point device 1104 transmits compressed Ethernet ® frames 1605-1 and 1605-2 to the wireless terminal 1101-1. In the wireless terminal 1101-1, the header comparison section 1214 detects that the IP header is not present in the head of the payload of each Ethernet ® frame or, if the compression section 1202 locally uses a slot for the type of the Ethernet ® header of the compressed Ethernet ® frame and sets an identifier for identifying that the frame is the compressed Ethernet ® frame in the slot, the header comparison section 1214 detects the identifier, thereby recognizing the compressed Ethernet ® frames 1605-1 and 1605-2. If so, the restoration section 1213 inserts the IP header and the UDP header stored in the header storage section 1215 into each of the compressed Ethernet ® frames 1605-1 and 1605-2, thereby obtaining a restored IP packet.

Fig. 17 illustrates the formats of the ordinary Ethernet ® frames 1601 and 1602 and the format of the compressed Ethernet ® frame 1605. The ordinary Ethernet ® frames 1601 and 1602 are based on the standard. The IP header of each ordinary Ethernet ® frame includes an identifier (ID) which occupies $33^{rd}$ to $48^{th}$ bits. This identifier varies from Ethernet ® frame to Ethernet ® frame. For this reason, the identifier cannot be stored in the header storage section 1215 and restored by the restoration section 1213. Therefore, the compression section 1202 extracts this identifier from the IP header and, as shown in Fig. 17, inserts the extracted identifier into the payload of the compressed Ethernet ® frame 1605. The restoration section 1213 extracts the identifier inserted into the payload whenever the wireless terminal receives the compressed Ethernet ® frame 1605, inserts the extracted identifier into the IP header stored in the header storage section 1215, adds the IP header into which the identifier is inserted as well as the UDP header to a region in front of the codec signal, thereby restoring the IP packet. However, if the compressed Ethernet ® frame 1605 is not retransmitted between the access point device 1104 and the wireless terminal 1101-1, the wireless terminal 1101-1 may reproduce an individual pseudo-identifier. In that case, the identifier is not inserted into the compressed Ethernet ® frame 1605.

The first-half 12 bytes of the codec signal are for an RTP header and a sum of the 12 bytes and the bytes of a CSRC (Contribution Source Identifier) is 20 bytes. In case of a G.729 codec, the second-half ten bytes of the codec signal are for actual data. The number of bytes for the actual data changes according to the payload header.

If receiving at least two Ethernet ® frames equal in sender IP address, destination IP address, protocol number, sender port number, and destination port number, then the header comparison section 1215 determines to start compressing the Ethernet ® frame. Alternatively, the header comparison section 1215 may determine whether to start compressing the Ethernet ® frame by checking a value, pattern, or sequence of at least one of a sender MAC address, a destination MAC address, an RTP header, an RTCP, the SIP header for VoIP, an H.248 (MEGACO) header, an H. 323 header, an HTML (Hyper Text Markup Language) header, an SNMP (Simple Network Management Protocol) header, and a COPS (Common Open Policy Service).

Furthermore, the header comparison section 1214 may determine whether the Ethernet ® frame includes the UDP header and the RTP header while ignoring the IP header of the frame. If the Ethernet ® frame includes these headers, the header comparison section 1214 stores the Ethernet ® header, IP header (except for the identifier), the UDP header, and the RTP header of the Ethernet ® frame including the UDP header and the RTP header. If the terminal receives the Ethernet ® frame having an Ethernet ® header, an IP header (except for the identifier), a UDP header, and an RTP header equal to the stored headers, the header comparison section 1214 specifies an IP address, a protocol number, and a port number included in the received Ethernet ® frame, thereby determining to start compressing the Ethernet ® frame. Further, the header comparison section 1214 may determine whether the Ethernet ® frame includes the RTP header while ignoring the IP header and the UDP header of the frame. If the Ethernet ® frame includes the RTP header, the header comparison section 1214 stores the Ethernet ® header, the IP header (except for the identifier), the UDP header, and the RTP header of the Ethernet ® frame including the RTP header. If the terminal receives the Ethernet ® frame having an Ethernet ® header, an IP header (except for the identifier), a UDP header, and an RTP header (except for a timestamp and a sequence number) equal to the stored headers, the header comparison section 1214 may specify an IP address, a protocol number, and a port number included in the received Ethernet ® frame, thereby determining to start compressing the Ethernet ® frame. Furthermore, the header comparison section 1214 may assume that the Ethernet ® frame includes the RTP header by determining that the Ethernet ® frames have the same sender IP, the same destination IP, and the same UDP port number. The header comparison section 1214 may grasp a port number while checking RTP path setting information on the H.323, SIP or H.248 header, and determine to start compressing Ethernet ® frames based on the sender IP address, the destination IP address, and the grasped port number (in the UDP header) of each frame.

The control section 1203 of the access point device 1104 causes the compression section 1202 to end the compression of the Ethernet ® frame when, for example, the Ethernet ® frame including the header(s) to be deleted by the compression section 1202 does not arrive for predetermined time. Alternatively, the control section 1203 may cause the compression section 1202 to end the compression of the Ethernet ® frames when the wireless terminal 1101-1 logs in the access point device 1104 again. The wireless terminal is notified of the end of the compression by a predetermined disconnecting packet.

Alternatively, the control section 1203 may cause the compression section 1202 to end the compression of the Ethernet ® frame when an overload, a reset, or the like occurs.

While the example of transmitting voice or moving picture data according to the RTP has been described above, the invention can be also applied to the transmission of the voice or moving picture data according to other protocols. Furthermore, the present invention can be applied to the transmission of cyclic data transmitted according to the RTP or other protocols.

In the above description, the compression request signal includes the designation of the IP address, the protocol number, and the port number, and the compression section 1202 compresses the Ethernet ® frame having the designated IP address, protocol number and port number. Alternatively, the compression section 1202 may detect the MAC address of the wireless terminal which transmits a compression request signal, search an ordinary Ethernet ® frame addressed to the MAC address and including the latest codec signal, and thereby compress a future ordinary Ethernet ® frame having an IP address, a protocol number, and a port number equal to those included in the searched ordinary Ethernet ® frame.

[EIGHTH EMBODIMENT]

According to the related art, the access point device 1104 transfers ordinary Ethernet ® frames to the wireless terminal 1101-1 as they are. In addition, according to the related art, the number of Ethernet ® frames which one wireless LAN frame can include is one and the number of wireless LAN frames which one access point device can transmit per unit time is limited to a predetermined number or less. Due to this, conventionally, if the number of bytes of a codec signal included in the Ethernet ® frame transmitted from the wired network equipment to the access point device is small, the wireless bandwidth of the wireless LAN system cannot be effectively utilized. In case of the VoIP, in particular, since the number of bytes included in one codec signal is small, this disadvantage is conspicuous. The eighth embodiment of the present invention is intended to solve this disadvantage.

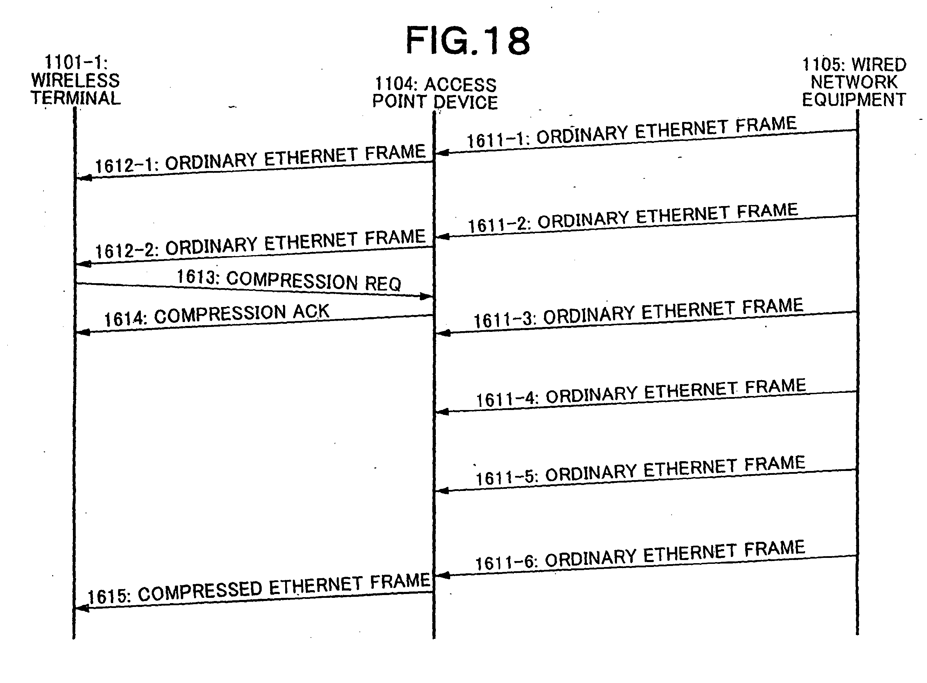

Fig. 18 is a sequence diagram illustrating the operations of the wireless terminal 1101-1, the access point device 1104, and the wired network equipment 1105 in the eighth embodiment according to the present invention. Referring to Fig. 18, the wired network equipment 1105 sequentially transmits ordinary Ethernet ® frames 1611-1 to 1611-6 addressed to the wireless terminal 1101-1, to the access point device 1104. The access point device 1104 transfers the ordinary Ethernet ® frames 1611-1 and 1611-2 to the wireless terminal 1101-1 as ordinary Ethernet ® frames 1612-1 and 1612-2, respectively. In addition, the header comparison section 1214 of the wireless terminal 1101-1 recognizes the reception of the ordinary Ethernet ® frames 1612-1 and 1612-2 each of which encapsulates a codec signal thereinto. Accordingly, the header storage section 1215 of the wireless terminal 1101-1 stores the IP header and the UDP header described in the Ethernet ® frame 1612-2, and the compression request transmission section 1212 transmits a compression request (compression REQ) 1613 to the access point device 1104. In response to the compression request 1613, the control section 1203 of the access point device 1104 transmits a compression acknowledgement (compression ACK) 1614 to the wireless terminal 1101-1. Thereafter, the compression section 1202 of the access point device 1104 directly inserts codec signals included in the ordinary Ethernet ® frames 1611-3, 1611-4, 1611-5, and 1611-6 into the payload of one Ethernet ® frame without interposition of an IP packet and a UDP packet to generate a compressed Ethernet ® frame 1615, and transmits the compressed Ethernet ® frame 1615 to the wireless terminal 1101-1. In the wireless terminal 1101-1, the header comparison section 1214 detects that an IP header is not present in the head of the payload of the Ethernet ® frame or, if the compression section 1202 locally uses a slot for the type of the Ethernet ® header of the compressed Ethernet ® frame and sets an identifier for identifying that the frame is the compressed Ethernet ® frame in the slot, the header comparison section 1214 detects the identifier, thereby recognizing the compressed Ethernet ® frame 1615. If so, the restoration section 1213 inserts the IP header and the UDP header stored in the header storage section 1215 into the compressed Ethernet ® frames 1615, thereby obtaining a restored IP packet.

The retransmission control such as retry may be specially intensified for the compressed Ethernet ® frame.

Fig. 19 illustrates the formats of the ordinary Ethernet ® frames 1611-3 to 1611-6 and the format of the compressed Ethernet ® frame 1615. The IP header of each ordinary Ethernet ® frame includes an identifier (ID) which occupies 33rd to 48th bits. This identifier varies from Ethernet ® frame to Ethernet ® frame. Due to this, the identifier cannot be stored in the header storage section 1215 and restored by the restoration section 1213. Therefore, the compression section 1202 extracts this identifier from the IP header and, as shown in Fig. 19, inserts the extracted identifier into the payload of the compressed Ethernet ® frame 1615. The restoration section 1213 extracts the identifier inserted into the payload whenever the wireless terminal receives the compressed Ethernet ® frame 1615, inserts the extracted identifier into the IP header stored in the header storage section 1215, adds the IP header into which the identifier is inserted as well as the UDP header to a region in front of the codec signal, thereby restoring four IP packets. However, if the compressed Ethernet ® frame 1605 is not retransmitted between the access point device 1104 and the wireless terminal 1101-1, the wireless terminal 1101-1 may reproduce an individual pseudo-identifier individual. In that case, the identifier is not inserted into the compressed Ethernet ® frame 1615.

In the eighth embodiment, the number of Ethernet ® frames transmitted from the access point device 1104 can be decreased. From another point of view, the number of bytes of a codec signal included in one wireless LAN frame can be increased. In the eighth embodiment, therefore, the wireless bandwidth of the wireless LAN system can be effectively utilized.

[NINTH EMBODIMENT]

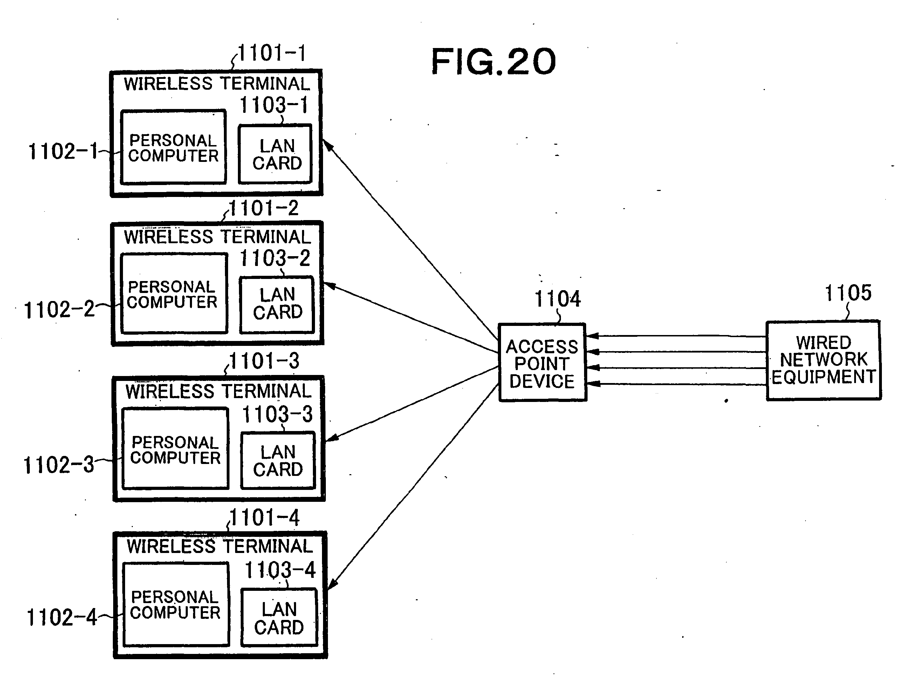

In the seventh and eighth embodiments, the example in which one wireless terminal 1101-1 receives codec signals has been described. In the ninth embodiment, a plurality of wireless terminals 1101-1 to 1101-4 receive codec signals as shown in Fig. 20.

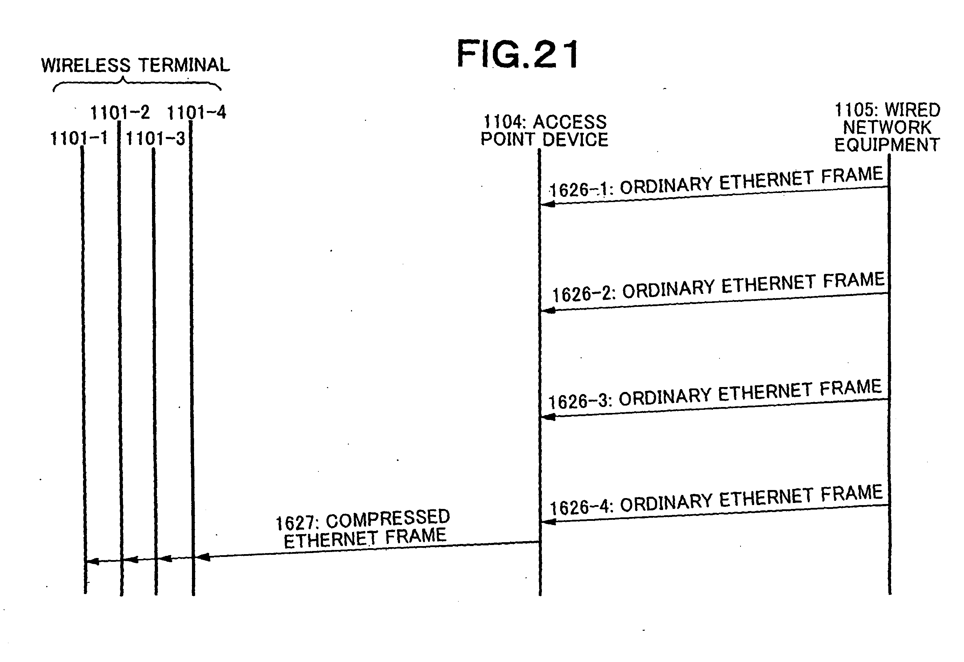

Fig. 21 is a sequence diagram illustrating operations in the ninth embodiment. Referring to Fig. 21, the wired network equipment 1105 transmits an ordinary Ethernet ® frame 1626-1 addressed to the wireless terminal 1101-1, an ordinary Ethernet ® frame 1626-2 addressed to the wireless terminal 1101-2, an ordinary Ethernet ® frame 1626-3 addressed to the wireless terminal 1101-3, and an ordinary Ethernet ® frame 1626-4 addressed to the wireless terminal 1101-4, to the access point device 1104 in this order. Thereafter, the access point device 1104 broadcasts or multicasts a compressed Ethernet ® frame 1627 into which codec signals included in the Ethernet ® frames 1626-1 to 1626-4 are encapsulated, to each of the wireless terminals 1101-1 to 1101-4.

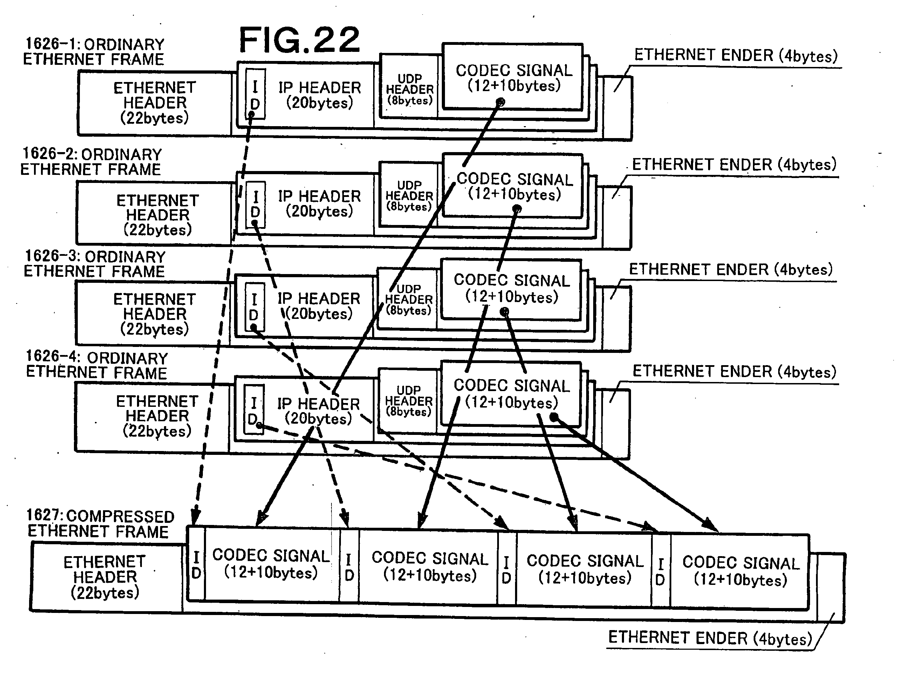

Fig. 22 illustrates the formats of the ordinary Ethernet ® frames 1626-1 to 1626-4 and the format of the compressed Ethernet ® frame 1627. The ordinary Ethernet ® frames 1626-1 to 1626-4 are based on the standard. Identifiers of IP headers and codec signals included in the respective ordinary Ethernet ® frames 1626-1 to 1626-4 are directly inserted into the payload of the compressed Ethernet ® frame 1627 without interposition of an IP packet and a UDP packet. If the wireless terminals 1101-1 to 1101-4 reproduces individual pseudo-identifiers, the identifiers may be deleted from the compressed Ethernet ® frame 1627.

The slot numbers of codec signals related to compression are inserted into a compression acknowledgement (compression ACK) transmitted from the access point device 1104 to the wireless terminal which have transmitted a compression request to the access point device 1104, whereby the wireless terminal can identify the position of the codec signal addressed to the wireless terminal based on the slot number of the codec signal. In addition, even if the wireless terminal holds two or more communications using the compressed Ethernet ® frame through different ports, the wireless terminal can identify these communications based on the slot numbers of the codec signals. This is because the codec signals for the communications using the different ports are inserted into the different slots. In the example of Fig. 22, the slot numbers are numbered 1 to 4 for the codec signals addressed to the wireless terminals 1101-1 to 1101-4, respectively. Alternatively, offsets indicating slot positions may be used in place of the slot numbers.

For example, if the ordinary Ethernet ® frame 1626-1 arrived one cycle before (before the access point device 1104 transmitted a compressed Ethernet ® frame preceding the compressed Ethernet ® frame 1627) due to a jitter, two codec signals addressed to the wireless terminal 1101-1 are inserted into the compressed Ethernet ® frame which arrives one cycle before and not inserted into the compressed Ethernet ® frame 1627. If two codec signals addressed to the same wireless terminal using the same port are inserted into one compressed Ethernet ® frame, a series of codec signals are inserted as usual into the payload of the compressed Ethernet ® frame and pairs of the codec signals addressed to the wireless terminal and slot numbers in a normal case are added to the end of the payload, for example. If codec signals addressed to a certain wireless terminal are not inserted into the compressed Ethernet ® frame, bits of all the codec signals are set at nulls, for example.

Only a maximum of 1500 bytes of data can be inserted into one Ethernet ® frame. However, if the number of bytes including those for the codec signals addressed to all the wireless terminals exceeds 1500 because of an increase in the number of wireless terminals connected to the access point device 1104 or the like, the codec signals addressed to all the wireless terminals are transmitted using a plurality of compressed Ethernet ® frames. In this case, division codes, the frame numbers of divided compressed Ethernet ® frames, and the like are described in the payload of the respective divided compressed Ethernet ® frames so that each terminal can recognize that the codec signals are divided according to the plural compressed Ethernet ® frames and transmitted thereto.

In the ninth embodiment, the number of Ethernet ® frames transmitted from the access point device 1104 can be decreased. From another point of view, the number of bytes of a codec signal input into one wireless LAN frame can be increased. Therefore, in the ninth embodiment, the wireless bandwidth of the wireless LAN system can be effectively utilized.

[TENTH EMBODIMENT]

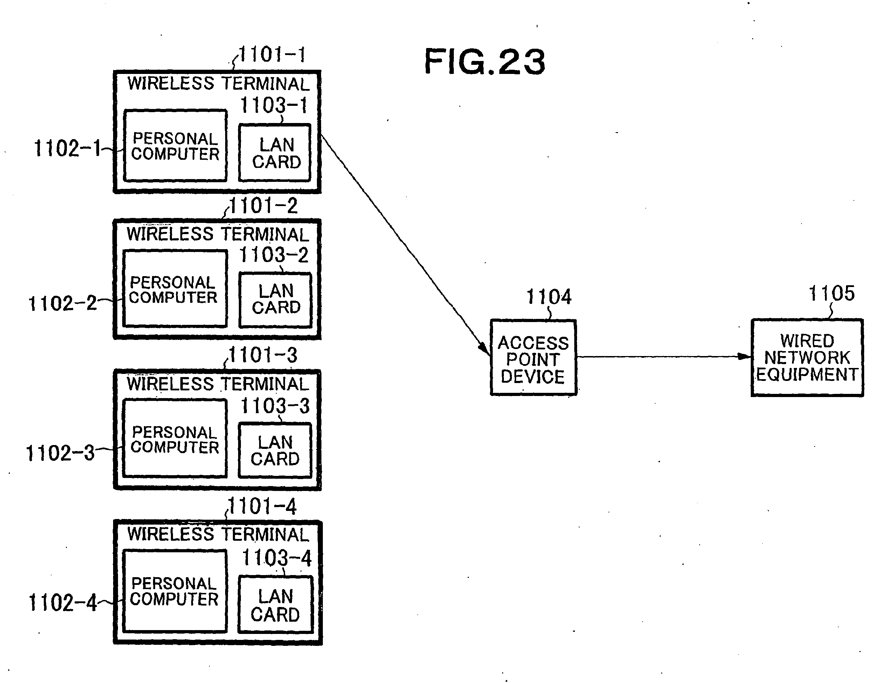

In the tenth embodiment, an example in which one wireless terminal 1101-1 transmits a codec signal to the wired network device 1105 through the access point device 1104 as shown in Fig. 23 will be described.

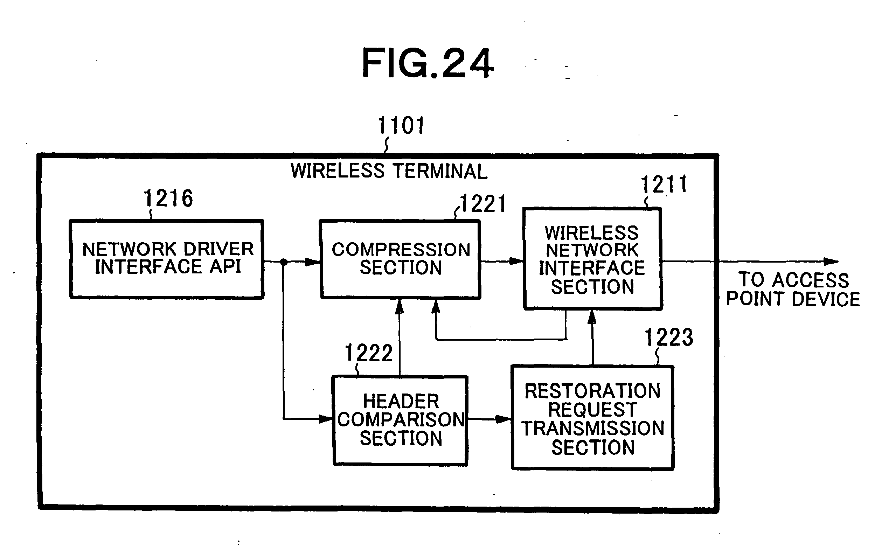

Fig. 24 is a conceptual view illustrating the important sections of the wireless terminal 1101 related to the tenth embodiment. Referring to Fig. 24, the wireless terminal 1101 includes a compression section 1221, a header comparison section 1222, and a restoration request transmission section 1223 as well as the wireless network section 1211 and the network driver interface API 1216 shown in Fig. 15. The network driver interface API 1216 receives an IP packet including a codec signal from a higher level layer. The compression section 1221 generates a compressed Ethernet ® frame based on the IP packet input from the network driver interface API 1216. The wireless network interface section 1211 transmits a wireless LAN frame including the Ethernet ® frame to the access point device 1104. The header comparison section 1222 makes a predetermined comparison related to the headers of the IP packet input from the network driver interface API 1216 or the like, and determines whether to start or end the compression of the Ethernet ® frame based on the comparison result. The restoration request transmission section 1223 transmits a restoration request (restoration REQ) to the access point device 1104 if the header comparison section 1222 determines to start the compression of the Ethernet ® frame.

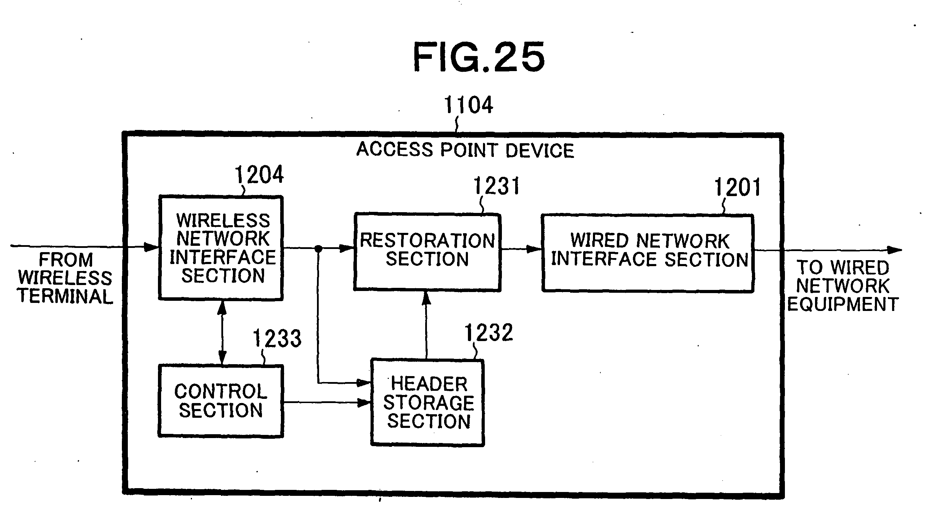

Fig. 25 is a conceptual view illustrating the important sections of the access point device 1104 related to the tenth embodiment. Referring to Fig. 25, the access point device 1104 includes a restoration section 1231, a header storage section 1232, and a control section 1233 in addition to the wired network interface section 1201 and the wireless network interface section 1204 shown in Fig. 14. The wireless network interface section 1204 receives the wireless LAN frame including the Ethernet ® frame from wireless terminal 1101. The restoration section 1231 restores the compressed Ethernet ® frame input from the wireless network interface section 1204 into an ordinary Ethernet ® frame using the IP header and the UDP header stored in the header storage section 1232. The wired network interface section 1201 transmits ordinary Ethernet ® frames to the wired network device 1105. The control section 1233 transmits a restoration acknowledgement (restoration ACK) in response to the restoration request received from the restoration request transmission section 1223 of the wireless terminal 1101. If there is a restoration request, the control section 1233 issues to the header storage section 1232 a request to store the IP header and the UDP header of the Ethernet ® frame input from the wireless network interface section 1204. The header storage section 1232 stores the IP header and the UDP header of the Ethernet ® frame input from the wireless network interface section 1204 in response to the request from the control section 1233.

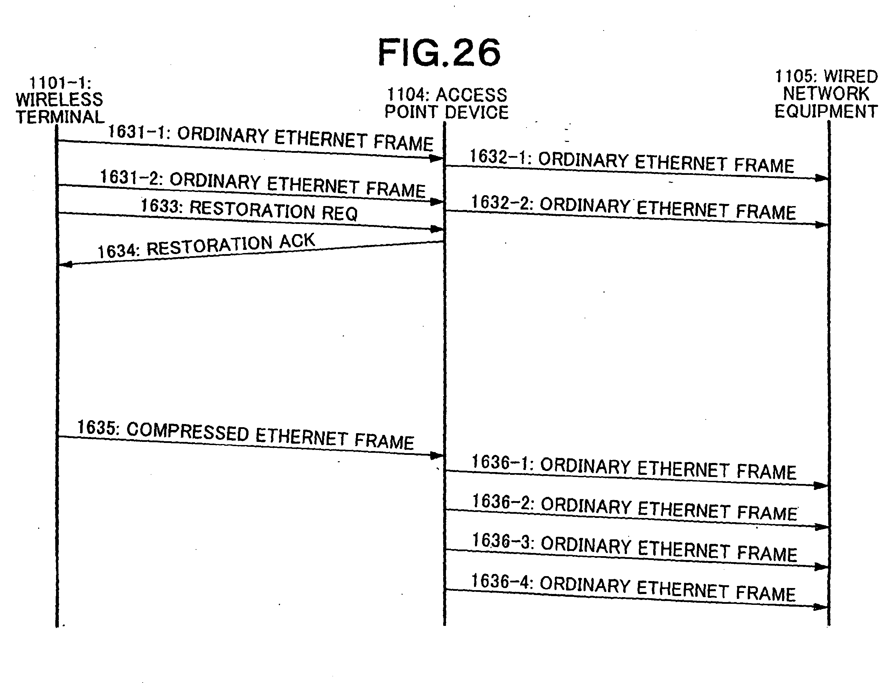

Fig. 26 is a sequence diagram illustrating the operations of the wireless terminal 1101-1, the access point device 1104, and the wired network equipment 1105 in the tenth embodiment. Referring to Fig. 26, the wireless terminal 1101-1 encapsulates ordinary Ethernet ® frames 1631-1 and 1631-2 into respective wireless LAN frames and transmits the wireless LAN frames to the access point device 1104. The access point device 1104 transfers the ordinary Ethernet ® frames 1631-1 and 1631-2 to the wired network equipment 1105 as ordinary Ethernet ® frames 1632-1 and 1632-2. Next, if the header comparison section 1222 of the wireless terminal 1101-1 detects that codec signals are included in the respective ordinary Ethernet ® frames 1631-1 and 1631-2 similarly to the header comparison section 1214, the restoration request transmission section 1223 of the wireless terminal 1101-1 transmits a restoration request (restoration REQ) 1633 to the access point device 1104. If the control section 1233 of the access point device 1104 receives the restoration request 1633, the control section 1233 stores an IP header and a UDP header included in the ordinary Ethernet ® frame 1631-2 in the header storage section 1232, and transmits a restoration acknowledgement (restoration ACK) 1634 to the wireless terminal 1101-1. Thereafter, if the compression section 1221 receives four IP packets including codec signals from the network driver interface API 1216, the compression section 1221 generates a compressed Ethernet ® frame 1635 including the codec signals included in the four IP packets and transmits the compressed Ethernet ® frame 1635 to the access point device 1104. When the access point device 1104 receives the compressed Ethernet ® frame 1635, the restoration section 1231 of the access point device 1104 restores four ordinary Ethernet ® frames 1636-1 to 1636-4 using the IP header and the UDP header stored in the header storage section 1232, and sequentially transmits the restored ordinary Ethernet ® frames 1636-1 to 1636-4 to the wired network equipment 1105.

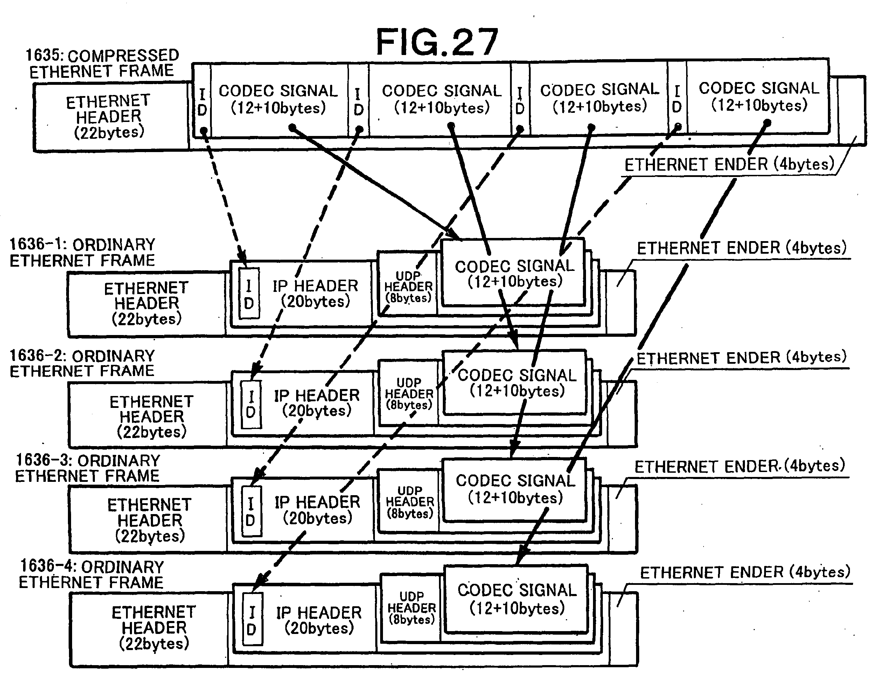

Fig. 27 illustrates the formats of the compressed Ethernet ® frame 1635 and the restored ordinary Ethernet ® frames 1636-1 to 1636-4. Four pairs of identifiers and codec signals are directly inserted into the payload of the compressed Ethernet ® frame 1635 without interposition of the IP packet and the UDP packet. The four identifiers in the the compressed Ethernet ® frame 1635 were originally included in the IP headers of the respective four IP packets input to the compression section 1221 from the network driver interface API 1216. The four codec signals in the the compressed Ethernet ® frame 1635 were originally included in UDP packets included in the respective four IP packets input to the compression section 1221 from the network driver interface API 1216. The ordinary Ethernet ® frames 1636-1 to 1636-4 are based on the standard. The four pairs of identifiers and codec signals included in the compressed Ethernet ® frame 1635 are distributed to the four ordinary Ethernet ® frames 1636-1 to 1636-4.

If the compressed Ethernet ® frame 1635 is not retransmitted between the access point device 1104 and the wireless terminal 1101-1, the access point device 1104 may generate individual pseudo-identifiers. In that case, the identifiers are not inserted into the compressed Ethernet ® frame 1635.

In the example of Figs. 26 and 27, the four codec signals are inserted into one compressed Ethernet ® frame. Generally, however, one or more codec signals are inserted into one compressed Ethernet ® frame. In addition, codec signals in the IP packets which the compression section 1221 receives within predetermined time may be inserted into one compressed Ethernet ® frame 1635 instead of specifying the number of codec signals inserted into one compressed Ethernet ® frame.

In the tenth embodiment, the number of Ethernet ® frames transmitted from the wireless terminal 1101 to the access point device 1104 can be decreased. From another point of view, the number of bytes of a codec signals inserted into one wireless LAN frame can be increased. Therefore, in the tenth embodiment, the wireless bandwidth of the wireless LAN system can be effectively utilized.

As described so far, the present invention can compensate for a lost packet in the simultaneous packet transmission over the wireless LAN which does not have a retransmission mechanism.

Further, the invention can compensate for a lost packet without a delay in the real-time communication using the VoIP or the like for which a delay in packet arrival is undesirable.

Moreover, the invention can improve packet transmission efficiency by unifying packets addressed to a plurality of terminals.

## Claims

1. A packet transmission system comprising:

   packet identification information addition means (140) for adding packet identification information to a packet to be transmitted; and
   transmission means (160) for transmitting said packet with said packet identification information a plurality of times even if the packet transmission system does not receive a retransmission request from a reception side, **characterized in that**
   said packet identification information addition means is configured to add said packet identification information belonging to a layer between a second OSI layer and a third OSI layer of the packet to be transmitted.

2. The packet transmission system according to claim 1, further comprising:

   compression means (1202) for deleting a header of a third OSI layer and a header of a fourth OSI layer of the packet to be transmitted, and for making data of a fifth OSI layer carried on a second OSI layer before adding the packet identification information to the packet to be transmitted.

3. The packet transmission system according to claim 1, wherein said packet is any one of a multicast packet and a broadcast packet.

4. The packet transmission system according to claim 1, wherein said transmission means (160) is configured to transmit said packet with said packet identification information and a redundant packet which is a duplicate of said packet with said packet identification information.

5. The packet transmission system according to claim 1, wherein said packet identification information addition means (140) is configured to add one said packet identification information to each of a plurality of packets to be transmitted.

6. The packet transmission system according to claim 1, further comprising:

   reception means (160) for receiving information on a multicast or broadcast packet loss frequency at the reception side per certain period, wherein
   said transmission means (140) is configured to change a transmission parameter based on said information on the multicast or broadcast packet loss frequency.

7. The packet transmission system according to claim 1, wherein said transmission means (160) is configured to transmit said packet with said packet identification information, with a MAC (Media Access Control) address common to a plurality of reception devices set as a destination address.

**8.** The packet transmission system according to claim 7, further comprising:

means (160) for retransmitting said packet if the packet transmission system does not receive an acknowledgement of transmission of said packet.

**9.** The packet transmission system according to claim 1, further comprising:

determination means (131) for determining whether information equal in type to the packet identification information to be added by the packet identification information addition means is already added to said packet to be transmitted, wherein

if a determination result of said determination means is positive, said packet to be transmitted is transmitted while bypassing said packet identification addition means (140) and said transmission means (160).

**10.** A wireless LAN base station comprising the packet transmission system according to any one of claims 1 to 9.

**11.** A conference server comprising the packet transmission system according to any one of claims 1 to 8.

**12.** A packet reception system comprising:

reception means (210) capable of receiving packets with the same packet identification information once or a plurality of times without a retransmission request;

determination means (220) for determining whether the reception means receives the packets with the same packet identification information the plurality of times or not; and

discard means (220) for leaving only one of the same packets and discarding the other packets if a determination result of said determination means is positive,

**characterized in that**

said packet identification information belongs to a layer between a second OSI layer and a third OSI layer of the packet received.

**13.** The packet reception system according to claim 12, wherein each of said packets received has a structure in which data of a fifth OSI layer is directly carried on a second OSI layer, and

the packet reception system further comprises restoration means (1213) for restoring a header of a third OSI layer and a header of a fourth OSI layer of each of said packets received by storing inalterable parts of the two headers in advance and adding the inalterable parts of the two headers to a received packet.

**14.** The packet reception system according to claim 12, wherein each of said packets is any one of a multicast packet and a broadcast packet.

**15.** The packet reception system according to claim 12, wherein each of said packets includes a plurality of higher level packets.

**16.** The packet reception system according to claim 12, further comprising:

counting means for counting a multicast or broadcast packet loss frequency per certain period; and

transmission means (210) for transmitting information on said multicast or broadcast packet loss frequency.

**17.** The packet reception system according to claim 12, further comprising:

holding means for holding a MAC address which is common to a plurality of reception devices, wherein

said reception means is configured to receive said packets having said MAC address as a destination MAC address.

**18.** The packet reception system according to claim 17, further comprising:

response means for transmitting an acknowledgement to a sender when said packets are received.

**19.** A packet transmission and reception system comprising:

the packet reception system according to claim 12;
detection means for detecting whether said reception means have received the same packets at least once or have not received the same packets at all; and
means for causing a plurality of higher level packets to be included in a packet to be transmitted based on a frequency with which said reception means have no received the same packets at all.

**20.** A wireless LAN terminal comprising the packet reception system according to any one of claims 12 to 18.

**21.** A wired LAN terminal comprising the packet reception system according to any one of claims 12 to 18.

**22.** A wireless LAN terminal comprising the packet transmission and reception system according to claim 19.

**23.** A wired LAN terminal comprising the packet transmission reception system according to claim 19.

**Patentansprüche**

**1.** Paketsendesystem, das folgendes aufweist:

eine Paketidentifikationsinformations-Hinzufügeeinrichtung (140) zum Hinzufügen von Paketidentifikationsinformation zu einem zu sendenden Paket; und
eine Sendeeinrichtung (160) zum Senden des Pakets mit der Paketidentifikationsinformation eine Vielzahl von Malen, selbst wenn das Paketsendesystem von einer Empfangsseite keine Anforderung für ein erneutes Senden empfängt;
**dadurch gekennzeichnet, dass**
die Paketidentifikationsinformations-Hinzufügeeinrichtung konfiguriert ist, um die zu einer Schicht zwischen einer zweiten OSI-Schicht und einer dritten OSI-Schicht des zu sendenden Pakets gehörende Paketidentifikationsinformation hinzuzufügen.

**2.** Paketsendesystem nach Anspruch 1, das weiterhin folgendes aufweist:

eine Kompressionseinrichtung (1202) zum Löschen eines Anfangsblocks einer dritten OSI-Schicht und eines Anfangsblocks einer vierten OSI-Schicht des zu sendenden Pakets und zum Veranlassen, dass Daten einer fünften OSI-Schicht vor einem Hinzufügen der Paketidentifikationsinformation zum zu sendenden Paket auf einer zweiten OSI-Schicht geführt werden.

**3.** Paketsendesystem nach Anspruch 1, wobei das Paket irgendeines eines mehrfach gesendeten Pakets und eines rundgesendeten Pakets ist.

**4.** Paketsendesystem nach Anspruch 1, wobei die Sendeeinrichtung (160) konfiguriert ist, um das Paket mit der Paketidentifikationsinformation und ein redundantes Paket, das eine Kopie des Pakets mit der Paketidentifikationsinformation ist, zu senden.

**5.** Paketsendesystem nach Anspruch 1, wobei
die Paketidentifikationsinformations-Hinzufügeeinrichtung (140) konfiguriert ist, um eine Paketidentifikationsinformation zu jedem einer Vielzahl von zu sendenden Paketen hinzuzufügen.

**6.** Paketsendesystem nach Anspruch 1, das weiterhin folgendes aufweist:

eine Empfangseinrichtung (160) zum Empfangen von Information über eine Häufigkeit eines Verlusts von mehrfach gesendeten oder rundgesendeten Paketen auf der Empfangsseite pro bestimmter Periode, wobei die Sendeeinrichtung (140) konfiguriert ist, um einen Sendeparameter basierend auf der Information über die Häufigkeit eines Verlusts von mehrfach gesendeten oder rundgesendeten Paketen zu ändern.

**7.** Paketsendesystem nach Anspruch 1, wobei die Sendeeinrichtung (160) konfiguriert ist, um das Paket mit der Paketidentifikationsinformation mit einer als Zielortadresse eingestellten MAC-(Medienzugriffssteuerungs-)Adresse, die für eine Vielzahl von Empfangsvorrichtungen gemeinsam ist, zu senden.

**8.** Paketsendesystem nach Anspruch 7, das weiterhin folgendes aufweist:

eine Einrichtung (160) zum erneuten Senden des Pakets, wenn das Paketsendesystem keine Bestätigung für ein Senden des Paktes empfängt.

**9.** Paketsendesystem nach Anspruch 1, das weiterhin folgendes aufweist:

eine Bestimmungseinrichtung (131) zum Bestimmen, ob Information gleichen Typs wie die durch die Paketidentifikationsinformations-Hinzufügeeinrichtung hinzuzufügende Paketidentifikationsinformation bereits zu dem zu sendenden Paket hinzugefügt ist, wobei,
wenn ein Bestimmungsergebnis der Bestimmungseinrichtung positiv ist, das zu sendende Paket gesendet wird, während die Paketidentifikationsinformations-Hinzufügeeinrichtung (140) und die Sendeeinrichtung (160) umgangen werden.

**10.** Drahtlose LAN-Basisstation mit dem Paketsendesystem nach einem der Ansprüche 1 bis 9.

**11.** Konferenzserver mit dem Paketsendesystem nach einem der Ansprüche 1 bis 8.

**12.** Paketempfangssystem, das folgendes aufweist:

eine Empfangseinrichtung (210), die Pakete mit derselben Paketidentifikationsinformation einmal oder eine Vielzahl von Malen ohne eine Anforderung für ein erneutes Senden empfangen kann;
eine Bestimmungseinrichtung (220) zum Bestimmen, ob die Empfangseinrichtung die Pakete mit derselben Paketidentifikationsinformation für die Vielzahl von Malen empfängt oder nicht; und
eine Wegwerfeinrichtung (220) zum Zurücklassen nur eines derselben Pakete und zum Wegwerfen der anderen Pakete, wenn ein Bestimmungsergebnis der Bestimmungseinrichtung positiv ist,
**dadurch gekennzeichnet, dass**
die Paketidentifikationsinformation zu einer Schicht zwischen einer zweiten OSI-Schicht und einer dritten OSI-Schicht des empfangenen Pakets gehört.

**13.** Paketempfangssystem nach Anspruch 12, wobei jedes der empfangenen Pakete eine Struktur hat, bei welcher Daten einer fünften OSI-Schicht direkt auf einer zweiten OSI-Schicht geführt werden, und
das Paketempfangssystem weiterhin eine Wiederherstelleinrichtung (1213) zum Wiederherstellen eines Anfangsblocks einer dritten OSI-Schicht und eines Anfangsblocks einer vierten OSI-Schicht jedes der empfangenen Pakete durch Speichern unveränderbarer Teile der zwei Anfangsblöcke im Voraus und durch Hinzufügen der unveränderbaren Teile der zwei Anfangsblöcke zu einem empfangenen Paket aufweist.

**14.** Paketempfangssystem nach Anspruch 12, wobei jedes der Pakete irgendeines eines mehrfach gesendeten Pakets und eines rundgesendeten Pakets ist.

**15.** Paketempfangssystem nach Anspruch 12, wobei jedes der Pakete eine Vielzahl von Paketen höherer Ebene enthält.

**16.** Paketempfangssystem nach Anspruch 12, das weiterhin folgendes aufweist:

eine Zähleinrichtung zum Zählen einer Häufigkeit eines Verlusts von mehrfach gesendeten oder rundgesendeten Paketen pro bestimmter Periode; und eine Sendeeinrichtung (210) zum Senden von Information über die Häufigkeit eines Verlusts von mehrfach gesendeten oder rundgesendeten Paketen.

**17.** Paketempfangssystem nach Anspruch 12, das weiterhin folgendes aufweist:

eine Halteeinrichtung zum Halten einer MAC-Adresse, die für eine Vielzahl von Empfangsvorrichtungen gemeinsam ist, wobei
die Empfangseinrichtung konfiguriert ist, um die Pakete mit der MAC-Adresse als Zielort-MAC-Adresse zu empfangen.

**18.** Paketempfangssystem nach Anspruch 17, das weiterhin folgendes aufweist:

eine Antworteinrichtung zum Senden einer Bestätigung zu einem Sender, wenn die Pakete empfangen sind.

**19.** Paketsende- und -empfangssystem, das folgendes aufweist:

das Paketempfangssystem nach Anspruch 12;
eine Erfassungseinrichtung zum Erfassen, ob die Empfangseinrichtung dieselben Pakete wenigstens einmal empfangen hat oder dieselben Pakete überhaupt nicht empfangen hat; und
eine Einrichtung zum Veranlassen, dass eine Vielzahl von Paketen höherer Ebene in einem zu sendenden Paket enthalten sind, basierend auf einer Häufigkeit, mit welcher die Empfangseinrichtung dieselben Pakete überhaupt nicht empfangen hat.

**20.** Drahtloses LAN-Endgerät, das das Paketempfangssystem nach einem der Ansprüche 12 bis 18 aufweist.

**21.** Verdrahtetes LAN-Endgerät, das das Paketempfangssystem nach einem der Ansprüche 12 bis 18 aufweist.

**22.** Drahtloses LAN-Endgerät, das das Paketsende- und -empfangssystem nach Anspruch 19 aufweist.

**23.** Verdrahtetes LAN-Endgerät, das das Paketsende- und -empfangssystem nach Anspruch 19 aufweist.

**Revendications**

**1.** Système de transmission de paquets comprenant :

des moyens d'ajout d'information d'identification de paquet (140) pour ajouter une information d'identification de paquet à un paquet devant être transmis ; et
des moyens de transmission (160) pour transmettre ledit paquet avec ladite information d'identification de paquet une pluralité de fois même si le système de transmission de paquets ne reçoit pas de requête de retransmission d'un côté réception,
**caractérisé en ce que**
lesdits moyens d'ajout d'information d'identification de paquet sont configurés pour ajouter ladite information d'identification de paquet appartenant à une couche entre une deuxième couche OSI et une troisième couche OSI du paquet devant être transmis.

**2.** Système de transmission de paquets selon la revendication 1, comprenant en outre :

des moyens de compression (1202) pour supprimer un en-tête d'une troisième couche OSI et un en-tête d'une quatrième couche OSI du paquet devant être transmis, et
pour acheminer des données d'une cinquième couche OSI sur une deuxième couche OSI avant d'ajouter l'information d'identification de paquet au paquet devant être transmis.

**3.** Système de transmission de paquets selon la revendication 1, dans lequel ledit paquet est l'un quelconque entre un paquet à multidiffusion et un paquet à diffusion générale.

**4.** Système de transmission de paquets selon la revendication 1, dans lequel lesdits moyens de transmission (160) sont configurés pour transmettre ledit paquet avec ladite information d'identification de paquet et un paquet redondant qui est un double dudit paquet avec ladite information d'identification de paquet.

**5.** Système de transmission de paquets selon la revendication 1, dans lequel
lesdits moyens d'ajout d'information d'identification de paquet (140) sont configurés pour ajouter une dite information d'identification de paquet à chacun d'une pluralité de paquets devant être transmis.

**6.** Système de transmission de paquets selon la revendication 1, comprenant en outre :

des moyens de réception (160) pour recevoir une information sur une fréquence de perte de paquets à multidiffusion ou à diffusion générale côté réception par certaine période, dans lequel lesdits moyens de transmission (140) sont configurés pour changer un paramètre de transmission sur la base de ladite information sur la fréquence de perte de paquets à multidiffusion ou à diffusion générale.

**7.** Système de transmission de paquets selon la revendication 1, dans lequel lesdits moyens de transmission (160) sont configurés pour transmettre ledit paquet avec ladite information d'identification de paquet, avec une adresse MAC (contrôle d'accès au support) commune à une pluralité de dispositifs de réception établie comme adresse de destination.

8. Système de transmission de paquets selon la revendication 7, comprenant en outre :

des moyens (160) pour retransmettre ledit paquet si le système de transmission de paquets ne reçoit pas d'accusé de réception de transmission dudit paquet.

9. Système de transmission de paquets selon la revendication 1, comprenant en outre :

des moyens de détermination (131) pour déterminer si une information du même type que l'information d'identification de paquet devant être ajoutée par les moyens d'ajout d'information d'identification de paquet est déjà ajoutée au dit paquet devant être transmis, dans lequel
si un résultat de détermination desdits moyens de détermination est positif, ledit paquet devant être transmis est transmis tout en contournant lesdits moyens d'ajout d'identification de paquet (140) et lesdits moyens de transmission (160).

10. Station de base LAN sans fil comprenant le système de transmission de paquets selon l'une , quelconque des revendications 1 à 9.

11. Serveur de conférence comprenant le système de transmission de paquets selon l'une quelconque des revendications 1 à 8.

12. Système de réception de paquets comprenant :

des moyens de réception (210) capables de recevoir des paquets avec la même information d'identification de paquet une fois ou une pluralité de fois sans requête de retransmission ;
des moyens de détermination (220) pour déterminer si les moyens de réception reçoivent les paquets avec la même information d'identification de paquet la pluralité de fois ou non ; et
des moyens de rejet (220) pour laisser un seul des mêmes paquets et rejeter les autres paquets si un résultat de détermination desdits moyens de détermination est positif,
**caractérisé en ce que**
ladite information d'identification de paquet appartient à une couche entre une deuxième couche OSI et une troisième couche OSI du paquet reçu.

13. Système de réception de paquets selon la revendication 12, dans lequel chacun desdits paquets reçus a une structure dans laquelle des données d'une cinquième couche OSI sont directement acheminées sur une deuxième couche OSI, et
le système de réception de paquets comprend en outre des moyens de restauration (1213) pour restaurer un entête d'une troisième couche OSI et un en-tête d'une quatrième couche OSI de chacun desdits paquets reçus en stockant des parties inaltérables des deux en-têtes à l'avance et en ajoutant les parties inaltérables des deux entêtes à un paquet reçu.

14. Système de réception de paquets selon la revendication 12, dans lequel chacun desdits paquets est l'un quelconque entre un paquet à multidiffusion et un paquet à diffusion générale.

15. Système de réception de paquets selon la revendication 12, dans lequel chacun desdits paquets comprend une pluralité de paquets de plus haut niveau.

16. Système de réception de paquets selon la revendication 12, comprenant en outre :

des moyens de comptage pour compter une fréquence de perte de paquets à multidiffusion ou à diffusion générale par certaine période ; et
des moyens de transmission (210) pour transmettre une information sur ladite fréquence de perte de paquets à multidiffusion ou à diffusion générale.

17. Système de réception de paquets selon la revendication 12, comprenant en outre :

des moyens de maintien pour maintenir une adresse MAC qui est commune à une pluralité de dispositifs de réception, dans lequel

lesdits moyens de réception sont configurés pour recevoir lesdits paquets ayant ladite adresse MAC comme adresse MAC de destination.

18. Système de réception de paquets selon la revendication 17, comprenant en outre :

des moyens de réponse pour transmettre un accusé de réception à un émetteur lorsque lesdits paquets sont reçus.

19. Système de transmission et de réception de paquets comprenant :

le système de réception de paquets selon la revendication 12 ;
des moyens de détection pour détecter si lesdits moyens de réception ont reçu les mêmes paquets au moins une fois ou n'ont pas reçu du tout les mêmes paquets ; et
des moyens pour inclure une pluralité de paquets de plus haut niveau dans un paquet devant être transmis sur la base d'une fréquence avec laquelle lesdits moyens de réception n'ont pas reçu du tout les mêmes paquets.

20. Terminal LAN sans fil comprenant le système de réception de paquets selon l'une quelconque des revendications 12 à 18.

21. Terminal LAN filaire comprenant le système de réception de paquets selon l'une quelconque des revendications 12 à 18.

22. Terminal LAN sans fil comprenant le système de transmission et de réception de paquets selon la revendication 19.

23. Terminal LAN filaire comprenant le système de transmission et de réception de paquets selon la revendication 19.

# FIG.1

10 ~ HOST NETWORK

## 100 BASE STATION

| TRANSMISSION AND RECEPTION SECTION | ~110 |

| BRIDGE SECTION | ~120 |

150

TRANSMISSION SEQUENCE NUMBER STORAGE SECTION

130

WIRELESS ZONE TRANSMISSION PACKET SORTING SECTION

REDUNDANT PACKET ADDITION SECTION

140

| WIRELESS TRANSMISSION AND RECEPTION SECTION | ~160 |

## 200 TERMINALS

| WIRELESS TRANSMISSION AND RECEPTION SECTION | ~210 |

20X

240

RECEIVED SEQUENCE NUMBER STORAGE SECTION

220

RECEIVED PACKET SORTING SECTION

REDUNDANT PACKET PROCESSING SECTION

230

| APPLICATION | ~250 |

EP 1 427 146 B1

# FIG.2

EP 1 427 146 B1

200: TERMINAL

10: HOST NETWORK

100: BASE STATION

230: REDUNDANT PACKET PROCESSING SECTION

250: APPLICATION

LAN PACKET
300

MULTICAST(SEQUENCE NUMBER=S)
301

HIGHER LEVEL PACKET
303

MULTICAST(SEQUENCE NUMBER=S)
302

DISCARD

LAN PACKET
310

MULTICAST(SEQUENCE NUMBER=S+1)
311

HIGHER LEVEL PACKET
313

MULTICAST(SEQUENCE NUMBER=S+1)
312

PACKET LOSS

LAN PACKET
320

MULTICAST(SEQUENCE NUMBER=S+2)
321

PACKET LOSS

MULTICAST(SEQUENCE NUMBER=S+2)
322

HIGHER LEVEL PACKET
323

# FIG.3

WAIT FOR PACKET RECEPTION

RECEIVE SIMULTANEOUS PACKET

220

221 SIMULTANEOUS PACKET? — NO

YES

222 IS PACKET ALLOCATED SEQUENCE NUMBER? — NO

YES

230

240 RECEIVED SEQUENCE NUMBER STORAGE SECTION

231 NEW SEQUENCE NUMBER? — NO

YES

232 UPDATE RECEIVED SEQUENCE NUMBER

233 RESTORE LAN PACKET AND TRANSFER RESTORED LAN PACKET TO APPLICATION

234 DISCARD PACKET

223 TRANSFER PACKET TO APPLICATION

WAIT FOR PACKET RECEPTION

EP 1 427 146 B1

# FIG.4

LAN PACKET: 401 LAN HEADER | 402 HIGHER LEVEL PACKET | 403 FCS
400 LAN PACKET

SIMULTANEOUS PACKET (410): 411 SIMULTANEOUS HEADER | 412 CARGO TYPE | 413 CARGO SIZE | 414 SEQUENCE NUMBER | 415 CARGO TYPE | 416 CARGO SIZE | 400 LAN PACKET | FCS

SIMULTANEOUS PACKET (420): 411 SIMULTANEOUS HEADER | 412 CARGO TYPE | 413 CARGO SIZE | 414 SEQUENCE NUMBER | 421 CARGO TYPE | 422 CARGO SIZE | 402 HIGHER LEVEL PACKET | FCS

SIMULTANEOUS PACKET (430): 411 SIMULTANEOUS HEADER | 412 CARGO TYPE | 413 CARGO SIZE | 414 SEQUENCE NUMBER | 421 CARGO TYPE | 422 CARGO SIZE | 402 HIGHER LEVEL PACKET | ... | 431 CARGO TYPE | 432 CARGO SIZE | 433 HIGHER LEVEL PACKET | FCS

EP 1 427 146 B1

# FIG.5

**100: BASE STATION**  **200: TERMINAL T**

| | | | |
|---|---|---|---|
| 500 | | 510 | |

DATA FRAME

| | |
|---|---|
| TERMINAL 1 INFORMATION | * |
| TERMINAL 2 INFORMATION | * |
| ⋮ | ⋮ |
| TERMINAL T INFORMATION | INCOMPA-TIBLE |
| | |

ADD TERMINAL TO FORWARDING TABLE

REGISTER TERMINAL AS INCOMPATIBLE TERMINAL WITH TERMINAL TYPE TABLE

520: TERMINAL TYPE REQUEST

530: RESPONSE TO TERMINAL TYPE REQUEST

| | |
|---|---|
| TERMINAL 1 INFORMATION | * |
| TERMINAL 2 INFORMATION | * |
| ⋮ | ⋮ |
| TERMINAL T INFORMATION | COMPATIBLE |
| | |

UPDATE REGISTRATION OF TERMINAL TYPE TABLE FROM INCOMPATIBLE TERMINAL TO COMPATIBLE TERMINAL

540: REPRESENTATIVE TERMINAL DESIGNATION

EP 1 427 146 B1

# FIG.6

10~ HOST NETWORK

100

**BASE STATION**

TRANSMISSION AND RECEPTION SECTION ~110

BRIDGE SECTION ~120

150

130

TRANSMISSION SEQUENCE NUMBER STORAGE SECTION

WIRELESS ZONE TRANSMISSION PACKET SORTING SECTION

COMPOSITE PACKET RESTORATION SECTION ~180

REDUNDANT PACKET ADDITION SECTION

RECEIVED PACKET SORTING SECTION ~170

140

WIRELESS TRANSMISSION AND RECEPTION SECTION ~160

200

20X

**TERMINALS**

WIRELESS TRANSMISSION AND RECEPTION SECTION ~210

240

220

RECEIVED SEQUENCE NUMBER STORAGE SECTION

RECEIVED PACKET SORTING SECTION

TRANSMISSION PACKET COMPOSITION SECTION ~270

REDUNDANT PACKET PROCESSING SECTION

TRANSMISSION PACKET ACCUMULATION SECTION ~260

230

APPLICATION ~250

EP 1 427 146 B1

## FIG.7

601 — UNICAST HEADER
602 — CARGO TYPE
603 — CARGO SIZE
604 — CARGO TYPE
610 — CARGO TYPE
611 — CARGO SIZE
612 — HIGHER LEVEL PACKET
6N0 — CARGO TYPE
6N1 — CARGO SIZE
6N2 — HIGHER LEVEL PACKET
FCS

UNICAST PACKET

## FIG.8

SIMULTANEOUS PACKET LOSS FREQUENCY

601 — UNICAST HEADER
602 — CARGO TYPE
603 — CARGO SIZE
604
610 — CARGO TYPE
611 — CARGO SIZE
612 — HIGHER LEVEL PACKET
6N0 — CARGO TYPE
6N1 — CARGO SIZE
6N2 — HIGHER LEVEL PACKET
FCS

UNICAST PACKET

600

# FIG.9

HOST NETWORK

100

UNICAST

700

VIRTUAL MAC ADDRESS

ACK

RECEPTION

200    201    20X

# FIG.10

# FIG.11

WAIT FOR TRANSMISSION PACKET

READ TRANSMISSION PACKET

130

131 IS PACKET ALLOCATED SEQUENCE NUMBER? — YES

NO

132 SIMULTANEOUS PACKET TO WIRELESS ZONE? — NO

YES

150 TRANSMISSION SEQUENCE NUMBER UPDATE SECTION

140

141 UPDATE SEQUENCE NUMBER

142 ADD SEQUENCE NUMBER

143 TRANSMIT SIMULTANEOUS PACKET

144 TRANSMIT REDUNDANT PACKET

133 TRANSMIT PACKET

WAIT FOR TRANSMISSION PACKET

EP 1 427 146 B1

FIG.12

FIG.13

EP 1 427 146 B1

# FIG.14

ACCESS POINT DEVICE 1104

FROM WIRED NETWORK EQUIPMENT → WIRED NETWORK INTERFACE SECTION (1201) → COMPRESSION SECTION (1202) → WIRELESS NETWORK INTERFACE SECTION (1204) → TO WIRELESS TERMINAL

CONTROL SECTION (1203)

EP 1 427 146 B1

# FIG.15

WIRELESS TERMINAL 1101

1211 WIRELESS NETWORK INTERFACE SECTION

1212 COMPRESSION REQUEST TRANSMISSION SECTION

1213 RESTORATION SECTION

1214 HEADER COMPARISON SECTION

1215 HEADER STORAGE SECTION

1216 NETWORK DRIVER INTERFACE API

FROM ACCESS POINT DEVICE

# FIG.16

1101-1:
WIRELESS
TERMINAL

1104: ACCESS
POINT DEVICE

1105: WIRED
NETWORK
EQUIPMENT

1601-1: ORDINARY ETHERNET FRAME

1602-1: ORDINARY ETHERNET FRAME

1601-2: ORDINARY ETHERNET FRAME

1602-2: ORDINARY ETHERNET FRAME

1603: COMPRESSION REQ

1604: COMPRESSION ACK

1601-3: ORDINARY ETHERNET FRAME

1605-1: COMPRESSED ETHERNET FRAME

1601-4: ORDINARY ETHERNET FRAME

1605-2: COMPRESSED ETHERNET FRAME

EP 1 427 146 B1

# FIG.17

EP 1 427 146 B1

1601,1602: ORDINARY
ETHERNET FRAME

| ETHERNET HEADER (22bytes) | I D | IP HEADER (20bytes) | UDP HEADER (8bytes) | CODEC SIGNAL (12+10bytes) | |

ETHERNET ENDER (4bytes)

1605: COMPRESSED
ETHERNET FRAME

| ETHERNET HEADER (22bytes) | I D | CODEC SIGNAL (12+10bytes) | |

ETHERNET ENDER (4bytes)

# FIG.18

1101-1:
WIRELESS
TERMINAL

1104: ACCESS
POINT DEVICE

1105: WIRED
NETWORK
EQUIPMENT

1611-1: ORDINARY ETHERNET FRAME

1612-1: ORDINARY ETHERNET FRAME

1611-2: ORDINARY ETHERNET FRAME

1612-2: ORDINARY ETHERNET FRAME

1613: COMPRESSION REQ

1614: COMPRESSION ACK

1611-3: ORDINARY ETHERNET FRAME

1611-4: ORDINARY ETHERNET FRAME

1611-5: ORDINARY ETHERNET FRAME

1611-6: ORDINARY ETHERNET FRAME

1615: COMPRESSED ETHERNET FRAME

EP 1 427 146 B1

# FIG.19

**1611-3: ORDINARY ETHERNET FRAME**

| ETHERNET HEADER (22bytes) | ID | IP HEADER (20bytes) | UDP HEADER (8bytes) | CODEC SIGNAL (12+10bytes) |

ETHERNET ENDER (4bytes)

**1611-4: ORDINARY ETHERNET FRAME**

| ETHERNET HEADER (22bytes) | ID | IP HEADER (20bytes) | UDP HEADER (8bytes) | CODEC SIGNAL (12+10bytes) |

ETHERNET ENDER (4bytes)

**1611-5: ORDINARY ETHERNET FRAME**

| ETHERNET HEADER (22bytes) | ID | IP HEADER (20bytes) | UDP HEADER (8bytes) | CODEC SIGNAL (12+10bytes) |

ETHERNET ENDER (4bytes)

**1611-6: ORDINARY ETHERNET FRAME**

| ETHERNET HEADER (22bytes) | ID | IP HEADER (20bytes) | UDP HEADER (8bytes) | CODEC SIGNAL (12+10bytes) |

ETHERNET ENDER (4bytes)

**1615: COMPRESSED ETHERNET FRAME**

| ETHERNET HEADER (22bytes) | ID | CODEC SIGNAL (12+10bytes) | ID | CODEC SIGNAL (12+10bytes) | ID | CODEC SIGNAL (12+10bytes) | ID | CODEC SIGNAL (12+10bytes) |

ETHERNET ENDER (4bytes)

EP 1 427 146 B1

# FIG.20

WIRELESS TERMINAL 1101-1
PERSONAL COMPUTER 1102-1
LAN CARD 1103-1

WIRELESS TERMINAL 1101-2
PERSONAL COMPUTER 1102-2
LAN CARD 1103-2

WIRELESS TERMINAL 1101-3
PERSONAL COMPUTER 1102-3
LAN CARD 1103-3

WIRELESS TERMINAL 1101-4
PERSONAL COMPUTER 1102-4
LAN CARD 1103-4

ACCESS POINT DEVICE 1104

WIRED NETWORK EQUIPMENT 1105

EP 1 427 146 B1

# FIG.21

1105: WIRED NETWORK EQUIPMENT

1626-1: ORDINARY ETHERNET FRAME

1626-2: ORDINARY ETHERNET FRAME

1626-3: ORDINARY ETHERNET FRAME

1626-4: ORDINARY ETHERNET FRAME

1104: ACCESS POINT DEVICE

1627: COMPRESSED ETHERNET FRAME

WIRELESS TERMINAL

1101-1  1101-2  1101-3  1101-4

FIG.22

FIG.23

EP 1 427 146 B1

# FIG.24

WIRELESS TERMINAL 1101

| 1216 | 1221 | 1211 |
|------|------|------|
| NETWORK DRIVER INTERFACE API | COMPRESSION SECTION | WIRELESS NETWORK INTERFACE SECTION |

TO ACCESS POINT DEVICE

1222 — HEADER COMPARISON SECTION

1223 — RESTORATION REQUEST TRANSMISSION SECTION

EP 1 427 146 B1

# FIG.25

1104

## ACCESS POINT DEVICE

1204

```
WIRELESS
NETWORK
INTERFACE
SECTION
```

1231

```
RESTORATION
SECTION
```

1201

```
WIRED NETWORK
INTERFACE SECTION
```

FROM
WIRELESS
TERMINAL

TO WIRED
NETWORK
EQUIPMENT

1233

```
CONTROL
SECTION
```

1232

```
HEADER
STORAGE
SECTION
```

# FIG.26

EP 1 427 146 B1

# FIG.27

EP 1 427 146 B1

**1635: COMPRESSED ETHERNET FRAME**

| ETHERNET HEADER (22bytes) | I D | CODEC SIGNAL (12+10bytes) | I D | CODEC SIGNAL (12+10bytes) | I D | CODEC SIGNAL (12+10bytes) | I D | CODEC SIGNAL (12+10bytes) | |

ETHERNET ENDER (4bytes)

**1636-1: ORDINARY ETHERNET FRAME**

ETHERNET ENDER (4bytes)

| ETHERNET HEADER (22bytes) | I D | IP HEADER (20bytes) | UDP HEADER (8bytes) | CODEC SIGNAL (12+10bytes) | |

**1636-2: ORDINARY ETHERNET FRAME**

ETHERNET ENDER (4bytes)

| ETHERNET HEADER (22bytes) | I D | IP HEADER (20bytes) | UDP HEADER (8bytes) | CODEC SIGNAL (12+10bytes) | |

**1636-3: ORDINARY ETHERNET FRAME**

ETHERNET ENDER (4bytes)

| ETHERNET HEADER (22bytes) | I D | IP HEADER (20bytes) | UDP HEADER (8bytes) | CODEC SIGNAL (12+10bytes) | |

**1636-4: ORDINARY ETHERNET FRAME**

ETHERNET ENDER (4bytes)

| ETHERNET HEADER (22bytes) | I D | IP HEADER (20bytes) | UDP HEADER (8bytes) | CODEC SIGNAL (12+10bytes) | |